# EUROPÄISCHE PATENTSCHRIFT

(11) **EP 2 593 413 B1**
(45) Veröffentlichungstag und Bekanntmachung des Hinweises auf die Patenterteilung: **22.10.2014**
(21) Anmeldenummer: 11751785.4
(22) Anmeldetag: 15.07.2011
(51) Int. Cl.: C04B 111/00, C04B 111/60, C04B 28/10

(54) **ZUSAMMENSETZUNG ZUR HERSTELLUNG RUTSCHHEMMENDER OBERFLÄCHEN**
COMPOSITION FOR PRODUCING ANTI-SLIP SURFACES
COMPOSITION DESTINÉE À LA FABRICATION DE SURFACES ANTIDÉRAPANTES

(30) Priorität: 19.01.2011 AT 782011; 15.07.2010 WO PCT/EP2010/004317
(43) Veröffentlichungstag der Anmeldung: 22.05.2013
(73) Patentinhaber: Kiss, Johan, 2435 Ebergassing (AT)
(72) Erfinder: KISS, Johann, A-2435 Ebergasing (AT)
(74) Vertreter: Ellmeyer, Wolfgang
(86) Internationale Anmeldenummer: PCT/AT2011/000305
(87) Internationale Veröffentlichungsnummer: WO 2012/006651

(56) Entgegenhaltungen:
- DD-A1- 156 612
- JP-A- 4 208 487
- KR-B1- 100 476 099
- US-A- 5 672 199

## Beschreibung

Die Erfindung betrifft Zusammensetzungen zur Herstellung rutschhemmender Ober-flächen, vorzugsweise Zusammensetzungen aus natürlichen Rohstoffkomponenten.

### STAND DER TECHNIK

Eine Vielzahl unterschiedlicher, zum Teil hochwirksamer Beschichtungs- und Bindemittelsysteme werden mit dem Ziel eingesetzt, die rutschhemmende Wirkung von Oberflächen und entsprechenden Produktmischungen zu verbessern. Dies geschieht entweder durch nachträgliche Oberflächenausrüstung von bestehenden Werkstoffen oder durch Herstellung von Werkstoffgemischen und -kombinationen mit rutschhemmender Wirkung. Den größten Anteil haben hierbei moderne synthetische Produkte, beispielsweise basierend auf Polyurethan-, Vinyl-, Acryl- und Synthesekautschuk, wie z.B. SBR, NBR etc., sowie Kombinationen mit anderen synthetischen Produkten. Naturkautschuksysteme decken zwar immer noch einige Bereiche ab, wurden aber in ihrer Bedeutung von den modernen synthetischen Werkstoffen abgelöst oder aus wirtschaftlichen oder/und qualitativen Gründen verdrängt und ersetzt.

Zur rutschhemmenden Oberflächenausrüstung werden flüssige Beschichtungs- und Bindemittelsysteme mit bekannten Fertigungstechnologien, wie z.B. Beschichten, Aufsprühen, Tauchen, Bedrucken, Aufstreichen, Transferbeschichtung etc., auf den Flächen aufgetragen, um die gewünschten Eigenschaften und Wirkungen sicherzustellen. Zunehmende Bedeutung haben auch moderne "Hotmelt"-Systeme erlangt, bei denen modifizierte Kunststoffe plastifiziert werden und über einen Extrusionsprozess ein "geschmolzener Folienfilm" lösemittelfrei auf den Oberflächen aufgetragen (sozusagen aufgeklebt) wird. Die thermische Belastbarkeit der beschichteten Produkte ist dabei nicht immer den Anforderungen der Praxis gewachsen (z.B. aufgrund von Veränderungen der Eigenschaften im Klimawechsel und Übergang zu Klebrigkeit bis hin zum Aufschmelzen bei hohen Temperaturen).

Der Klassiker und das am weitesten verbreitete Standardprodukt für rutschhemmende Matten oder Flächengebilde am Markt ist immer noch Gummi, genauer gesagt Gummigranulatprodukte, die aus Kostengründen bevorzugt aus Gummiabfällen oder Altreifen hergestellt werden. Daneben gibt es auch weitere Kunststoffgranulate, wie z.B. Polyurethanabfälle, die in granulierter Form neu gebunden werden. Eine weitere bedeutende und stark expansive Produktgruppe sind synthetische Schaumstoffe, die in ihren Eigenschaften Gummi mitunter deutlich übertreffen und gezielt dort Anwendung finden, wo hoher Reibwiderstand an den Grenzflächen notwendig oder ein Abfärben vermieden werden muss. Eine weitere Gruppe sind Kombinationsprodukte, in denen verschiedene Werkstoff-Träger mit rutschfesten Oberflächen veredelt sind. Als Beispiele seien beschichtetes Papier oder Folie, beschichtete Pappe sowie Pappe/ PU-Schaum-Laminat und beschichtete Textilien genannt.

Der überwiegende Teil der existierenden rutschhemmenden Produkte ist jedoch als Einwegprodukt ausgelegt und keinem zwingenden Recyclingsystem unterworfen, wodurch die ungeregelte Entsorgung und die damit einhergehende globale Verteilung biologisch bedenklich sind. Speziell Gummi und Polyurethane sind als problematisch anzusehen. Gummi ist nach der Vulkanisation mit Schwefel und in Verbindung mit den üblichen Zuschlagstoffen biologisch nur schwer und oft überhaupt nicht mehr abbaubar. Das trifft auch auf die große Gruppe der Polyurethane zu. Eine thermische Verwertung und Entsorgung ist bei diesen Produkten daher aufwändig und kostenintensiv und bisweilen, zumindest mit einfachen Verfahren und Systemen, gar nicht mehr möglich.

Speziell auf dem Gebiet der Ladungssicherung bei Transporten zu Lande, zu Wasser und in der Luft erfüllen rutschfest ausgerüstete Naturstoffprodukte wie Papier, Pappe, Kork, Holz etc. kaum die gesetzlich geregelten Mindestanforderungen für rutschhemmende Unterlagen. Es gibt Produkte die den thermischen Ansprüchen des Ladeguts, den Klimawechselwirkungen und auch den Einflüssen von Feuchte und Wasser nicht ausreichend gewachsen sind, was ihre Anwendung entsprechend stark einschränkt. Speziell Naturlatexsysteme werden bevorzugt nur noch dort eingesetzt, wo geringere mechanische Belastungen und Scherkräfte gegeben sind, z.B. als Zwischenlagen zur Stabilisierung von Verpackungseinheiten.

Ein weiterer Nachteil von Polymerlatexsystemen, einschließlich Naturlatex, ist deren mäßige bis geringe Verträglichkeit mit bestimmten Zusatzstoffen, insbesondere die Kombination mit bestimmten Elektrolyten, wie z.B. Basen, die ein Brechen der Emulsionen bewirken können, so dass eine Verarbeitbarkeit von Latizes nur unter speziellen Bedingungen möglich und oftmals nicht wirtschaftlich ist.

KR 100476099 B1 beschreibt eine Zusammensetzung zur Herstellung eines gummibeschichteten Nylonhandschuhs, die die folgenden Komponenten enthält: eine Latex-Basis, Schwefel als Vernetzer, Zink-di-n-butyldithiocarbamat als Co-Vemetzer, Stearinsäure als Dispergator, Casein als Emulsionsstabilisator, wässrigen Ammoniak, wässrige KOH-Lösung, Saponin als Schäumer, Methylcellulose als Verdicker und Zinkoxid als Vulkanisationsbeschleuniger. Pflanzliche Komponenten oder Löschkalk als Base werden darin nicht offenbart.

JP 4208487 A beschreibt eine Beschichtungszusammensetzung zur Herstellung einer farbgebenden Schicht auf druckempfindlichem Kopierpapier, die folgendes enthält: eine wässrige Dispersion von Weizenmehl, eine Dispersion von Hamstoff-Formaldehyd-Harz, Farbstoff enthaltende Mikrokapseln, organischen Entwickler enthaltende Mikrokapseln, eine wässrige Lösung von Polyvinylalkohol, einen Latex aus carboxymodifiziertem Styrol und Butadien und das Natriumsalz eines (Thio-)Äpfelsäuredi-alkylesters (z.B. 1 % Natriumdioctylsulfosuccinat). Tierische Proteine oder Basen sind nicht enthalten.

Ziel der Erfindung war vor diesem Hintergrund die Entwicklung einer Zusammensetzung zur Herstellung rutschhemmender Oberflächen, mit der die genannten Probleme im Zusammenhang mit Verarbeitbarkeit, Abbaubarkeit und Rezyklierbarkeit weitgehend gelöst werden können, die auf wirtschaftliche Weise herstellbar ist und die im Hinblick auf eine Verwendung zur Ladungssicherung die entsprechenden gesetzlichen Anforderungen erfüllt oder sogar übertrifft.

### OFFENBARUNG DER ERFINDUNG

Dieses Ziel erreicht die vorliegende Erfindung in einem ersten Aspekt durch Bereitstellung einer Zusammensetzung zur Herstellung rutschhemmender Oberflächen die Folgendes umfasst:
a) tierisches Protein,
b) pflanzliche Polymere,
c) Base und
d) Polymerlatex;
und die dadurch gekennzeichnet ist, dass
i) als pflanzliche Polymere b) pflanzliche Proteine, als solche oder in Form von Pflanzenteilen, Pflanzenmehl oder Pflanzenschrot enthalten sind; und
ii) als Base c) Ca(OH)₂ als Base und als Vernetzer enthalten ist und gegebenenfalls eine oder mehrere weitere Basen, ausgewählt aus Alkalimetall- und Erdalkalimetallhydroxiden, -hydrogencarbonaten und -carbonaten enthalten sind.

Im Zuge umfassender Studien und Experimente hat der Erfinder festgestellt, dass durch das Zusammenwirken dieser vier Komponenten Oberflächen erzeugt werden können, die hervorragende Antirutsch-Eigenschaften aufweisen, indem eine oberflächenaktive, d.h. Reibungsenergie aufnehmende, den jeweiligen Anforderungen entsprechend flexible und mit einem etwaigen Trägermaterial (bei Verwendung als Beschichtung) fest verbundene Kontaktfläche bereitgestellt wird. Es werden signifikant bessere Adhäsionseigenschaften mit unterschiedlichen Reibpartnem erreicht. Die unter Verwendung der erfindungsgemäßen Zusammensetzung erhältlichen Oberflächen sind beständig gegen Temperaturschwankungen, Feuchte und Nässe sowie gegen Scherwirkungen. Darüber hinaus besteht eine solche Zusammensetzung in überwiegendem Maße und mitunter sogar ausschließlich aus Naturprodukten, wodurch die Abbaubarkeit und Umweltverträglichkeit der Zusammensetzung im Vergleich zum Stand der Technik deutlich verbessert ist.

Die Zusammensetzung kann entweder als Beschichtung auf einen Träger aufgebracht oder als Formmasse oder Bindemittel eingesetzt und zu einem dreidimensionalen Gegenstand gestaltet werden, wobei in allen Fällen mehr oder weniger große Anteile weiterer, optionaler Komponenten berücksichtigt werden können. Diese sind nicht speziell eingeschränkt und umfassen beispielsweise Pigmente, Farbstoffe, Weichmacher, Fließ- oder Verdickungsmittel, Mischhilfen und Füllstoffe. Dazu zählen weiters auch Treibmittel, um die Zusammensetzung bewusst und gezielt aufzuschäumen, falls eine geschäumte rutschhemmende Oberfläche oder ein viskoelastisches geschäumtes Bauteil erhalten werden soll. Der Fachmann ist ohne übermäßigen Aufwand in der Lage, die für die jeweilige Anwendung geeigneten Zusätze für das jeweilige System zu ermitteln, wobei vorzugsweise Augenmerk auf den natürlichen Ursprung dieser Zusätze gelegt werden sollte. Die Eigenschaften der Zusammensetzung als Ganzes werden jedoch maßgeblich durch die Auswahl der für den jeweiligen Anwendungszweck geeignetsten Komponenten a) bis d) und deren Mischungsverhältnis in der erfindungsgemäßen Zusammensetzung bestimmt, weswegen nachstehend vor allem auf diese Grundkomponenten näher eingegangen wird.

### Komponente a) - Tierisches Protein

Ohne sich auf eine bestimmte Theorie einschränken zu wollen, wird aufgrund der erzielten Ergebnisse angenommen, dass von den vier Komponenten der erfindungsgemäßen Zusammensetzung das tierische Protein aufgrund der folgenden Funktionen für den inneren Zusammenhalt der Bestandteile der Zusammensetzung verantwortlich ist. Durch gezielte und geeignete Auswahl des tierischen Proteins kann auch die Verträglichkeit mit weiteren Hilfs- oder Zusatzstoffen, wie z.B. Füllstoffen, hergestellt oder verbessert werden. Die folgenden Ausführungen gelten zum Teil auch für später näher beschriebene pflanzliche Proteine:
- Proteine, vor allem tierische Proteine, besitzen nach der Reaktion, d.h. unter anderem Vernetzung, mit sonstigen Komponenten der erfindungsgemäßen Zusammensetzung eine starke dispergierende bzw. emulgierende Wirkung, die es ermöglicht, bestimmte, bisher als unverträglich geltende Komponenten gemeinsam in eine stabile Zusammensetzung miteinzubeziehen.
- Proteine besitzen hydrophile und hydrophobe funktionelle Gruppen, die in der zielgerichteten Anwendung in einem rutschhemmenden System die Adhäsion an unterschiedlichen Kontaktflächen und Reibpartnem unterstützt und verstärken.
- Proteine, speziell tierische Proteine, bilden in der erfindungsgemäßen Zusammensetzung ein natürliches Klebstoffsystem, das in Beschichtungs- und Bindemittelsystemen die Verankerung an und Bindung zu anderen Kontaktflächen unterstützt und verstärkt.
- Natürliche Proteine, speziell tierische Proteine, erhöhen nach der Aushärtung und Vernetzung die innere Festigkeit von Beschichtungs- und Bindemittelsystemen, die durch die jeweils ausgewählten Reaktionspartner, d.h. die übrigen Komponenten der erfindungsgemäßen Zusammensetzung, verstärkt oder auch reduziert werden kann.

Das tierische Protein ist nicht speziell eingeschränkt, und es können Milchproteine ebenso eingesetzt werden wie andere natürliche Proteinquellen oder auch Abfallprodukte mit tierischen Proteinbestandteilen, z.B. Kollagen bzw. Gelatine. Tierische Proteine haben 100%ig natürlichen Ursprung und sind daher zur Gänze biologisch abbaubar und darüber hinaus relativ kostengünstig verfügbar. In bevorzugten Ausführungsformen der erfindungsgemäßen Zusammensetzung sind als tierisches Protein Milchproteine, noch bevorzugter in Form von Milch, Magermilch und/oder eines oder mehrerer Milchprodukte enthalten, insbesondere Kuhmilch oder Produkte davon, wie z.B. Quark, Käse oder Joghurt, oder auch, gegebenenfalls entfettetes, Milchpulver sowie Molkeproteine. Deren Zusammensetzung unterliegt keinen so starken Schwankungen wie jene anderer natürlicher Proteinquellen, da Caseinproteine als Hauptbestandteile ca. 80 % des Proteinanteils in Milch ausmachen. Die in der ursprünglichen und natürlich vorkommenden Proteinquelle Milch enthaltenen Begleitstoffe, wie z.B. Zucker und Fett, sind in der erfindungsgemäßen Zusammensetzung nicht störend und unterstützen/verbessern die Verträglichkeit der Komponenten untereinander als auch jene mit zusätzlichen, optionalen Komponenten, wie z.B. Füllstoffen. Obwohl Fette in der alkalischen Rezeptierung verseifen und das System vorteilhaft unterstützen, muss im Hinblick auf bestmöglichen Reibwiderstand einer rutschhemmenden Oberfläche und auch im Zusammenhang mit einer wasserbeständigen Rezeptierung die Konzentration und Höhe des Fettanteils berücksichtigt werden.

Andere tierische Proteine als Milchproteine und Hautleim wurden in einfachen Parallelversuchen auf ihre Eignung und Wirksamkeit zur Herstellung rutschfester Beschichtungs- und Bindemittelmassen getestet und miteinander verglichen. Dabei wurde bestätigt, dass die Reaktionen und Ergebnisse der tierischen Proteine zwar grundsätzlich vergleichbar sind, jedoch jede Proteinquelle für sich aufgrund ihrer Zusammensetzung eigenständige individuelle Produktcharakteristiken besitzen die beachtet werden müssen und bei Bedarf auch gezielt nutzbar sind.

Tierische Proteine führen meist zu harten, stabilen und festen Verbindungen mit den geeigneten Reaktionspartnern, wobei zu berücksichtigen ist, dass die Proteinkonzentration in einem proteinhältigen Ausgangsprodukt variieren kann und in der Rezeptierung entsprechend berücksichtigt werden muss. Auf einzelne, bevorzugte Vertreter dieser Gruppe und deren konkrete Auswirkungen auf die Eigenschaften der erfindungsgemäßen Zusammensetzungen wird später noch näher eingegangen. Pflanzliche Proteine unterscheiden sich in Ihren Eigenschaften hingegen deutlich und werden nachfolgend beschrieben.

### Komponente b) - Pflanzliche Polymere

Von den pflanzlichen Polymeren, worunter hierin nicht ausschließlich, aber vor allem pflanzliche Proteine und Polysaccharide und unter Letzteren vor allem Stärke und Cellulose, zu verstehen sind, wird aufgrund ihrer charakteristischen Eigenschaften (wiederum: ohne sich auf eine bestimmte Theorie beschränken zu wollen) angenommen, dass sie vorwiegend die klebenden und haftungsfördernden Funktionen des erfindungsgemäßen Beschichtungs- und Bindemittelsystems unterstützen und die innere Festigkeit der zielorientierten Systeme stabilisieren und verstärken. Darüber hinaus können sie viskoelastischen Eigenschaften eines hochelastischen Systems verbessern und so zur Steuerung der aus der Zusammensetzung erhaltenen Beschichtungen oder Gegenstände beitragen.

Die Eigenschaften der pflanzlichen Proteine als natürliche Polymere variieren relativ stark. Abgesehen von den schon sehr unterschiedlichen Proteinqualitäten in den pflanzlichen Naturstoffen, die jeweils unterschiedliche Eigenschaftsprofile aufweisen, unterscheiden sich auch die Konzentrationen der Proteine und der Begleitstoffe wie Stärke, Fett, Zucker, Zellstoff etc. Pauschal lässt sich aber im Vergleich zu tierischen Proteinen feststellen, dass pflanzliche Proteine zu flexibleren und elastischeren Produkten führen und die Reaktion mit alkalischen Reaktionskomponenten deutlich wirksamere und effizientere "Klebstoffsysteme" ermöglicht. Die Benetzbarkeit und die Verankerung auf unterschiedlichen Werkstoffen wird von pflanzlichen Proteinen deutlich stärker gefördert als von tierischen Proteinsystemen.

Die Begleitstoffe von pflanzlichen Proteinen, die in reinen Klebstoffsystemen aufgrund von dort unerwünschten Eigenschaften eher störend ist, werden in der erfindungsgemäßen Zusammensetzung bewusst genutzt und als weitere wichtige funktionelle Komponenten eingesetzt. So entfaltet etwa der Stärkeanteil der pflanzlichen Polymere dann seine optimale Wirkung, wenn er in einem Kochprozess aufgeschlossen wird und im aufgeschlossenen Zustand mit den alkalischen Reaktionskomponenten reagiert und vemetzt aushärtet. Das Reaktionsprodukt solcher pflanzlicher Polymere ist ein hartes, sehr stabiles Produkt, in dem sehr gute Wasserbeständigkeit mit hohem Vernetzungsgrad kombiniert ist.

In der vorliegenden Erfindung sind pflanzliche Proteine ein wichtiger Bestandteil, um die Binde- und Klebekraft zu einem Trägermedium oder zu etwaigen Füllstoffen zu verstärken, die adhäsiven Oberflächeneigenschaften zu verbessern, die innere Festigkeit zu erhöhen, ohne die Elastizität des viskoelastischen Systems zu stark zu reduzieren, sowie um die Vernetzung und Wasserbeständigkeit des Latexsystems zu optimieren.

In Hauptgruppen unterteilt, bieten sich vor allem folgende pflanzliche Proteinquellen an.
- Getreideprodukte, die Klebereiweiß (Gluten) enthalten, z.B. Gerste, Weizen
- Pflanzen und Pflanzenfrüchte mit hohem Proteinanteil, z.B. Soja
- Proteinabfallprodukte aus der Stärke-, Öl- oder Alkoholgewinnung
- Proteinhältige Produkte, die im Zuge der rutschhemmenden Ausrüstung oder Bindung eines pflanzlichen Werkstoffs erst im zweiten Verarbeitungsschritt, wie nachstehend näher ausgeführt wird, aufgeschlossen und vemetzt werden, z.B. Gräser, Rindengranulate, pflanzliche Faserstoffe

Die Auswahl der pflanzlichen Polymere wird von der Zusammensetzung der jeweiligen Quelle bestimmt, wo je nach Proteingehalt und Konzentration der Begleitstoffe gezielte Eigenschaftsprofile genutzt und eingesetzt werden.

Pflanzliche Proteinquellen, die Klebereiweiß (Gluten) beinhalten, stellen die erfindungsgemäß bevorzugte Form pflanzlicher Proteinquellen dar. Klebereiweiße unterstützen und verbessern insbesondere die Haftung und Adhäsion von latexbasierten Zusammensetzungen, gewährfeisten durch ihre Flexibilität die Aufrechterhaltung der Elastizität und erhöhen zugleich die innere Festigkeit von elastischen Mischungen.

Andere bevorzugte pflanzliche Proteinquellen besitzen neben ihrer emulgierenden, benetzenden und mehr oder wenig stark klebenden und elastischen Wirkung und enthalten wasserbindende Pentosane oder schleimbildende Hemicellulosen, d.h. Stoffe, die in stark vernetzten (wasserbeständigen) Gemischen eine ausreichende Oberflächenbenetzbarkeit unter feuchten oder nassen Bedingungen sicherstellen und wasserabweisende Wirkungen vermeiden ("Silikon-Effekt", siehe unten).

Von den pflanzlichen Polysacchariden bildet vor allem die Stärkekomponente bei thermischem Aufschluss einen mehr oder weniger starken "Stärkekleister", der je nach Ursprung der Stärke unterschiedliche Festigkeit und Zähigkeit besitzt und die Benetzbarkeit und Haftung eines Beschichtungs- bzw. Bindemittelsystems der Erfindung unterstützt. In Gegenwart von aufgeschlossenen proteinhältigen Substanzen lassen sich Stärkebestandteile mit Erdalkalimetallhydroxyden gleichmäßig vernetzen und mit CO₂ zu wasserbeständigen sehr stabilen und festen Produkten "carbonatisieren".

Konkrete pflanzliche Polymere und deren Auswirkungen auf die Eigenschaften der erfindungsgemäßen Zusammensetzungen werden später noch näher beschrieben. Generell sind die pflanzlichen Polymere jedoch nicht speziell eingeschränkt. Vorzugsweise werden mehr oder weniger fein zerkleinerte oder gemahlene Pflanzen oder Pflanzenbestandteile als Quelle der pflanzlichen Polymere eingesetzt, wie z.B. Pflanzenschrot oder -mehl, Naturfasern, Baumwolle, Sägemehl, Zellstoff usw., da diese leicht verfügbar und kostengünstig sind. Besonders bevorzugt ist in der erfindungsgemäßen Zusammensetzung als Quelle der pflanzlichen Polymere Getreidemehl, noch bevorzugter Weizen- oder Reismehl, insbesondere Weizenmehl, enthalten, da dieses bei einfacher Verfügbarkeit relativ hohe Anteile an pflanzlichen Polymeren, d.h. Protein- und Stärkeanteile, bei gleichzeitig relativ niedrigem Fettanteil aufweist (Weizen: ca. 70 % Stärke, ca. 12 % Eiweiß, ca. 2 % Fett; Reis: ca. 75 % Stärke, ca. 7,5 % Eiweiß, ca. 2 % Fett; Hafer: ca. 63 % Stärke, ca. 12 % Eiweiß, ca. 7 % Fett).

### Komponente c) - Base

Die aus Alkalimetall- und Erdalkalimetallhydroxiden, -hydrogencarbonaten und -car-bonaten ausgewählten Reaktionskomponenten, worunter für die Zwecke der vorliegenden Erfindung auch - gemäß der anerkannten Definition von "Alkalien" - auch Ammoniak und dessen Carbonat und Hydrogencarbonat, z.B. in Form von Hirschhomsalz, fallen, dienen vordergründig dem Aufschluss und der Umsetzung der enthaltenen Naturstoffe zu entsprechenden Reaktionsprodukten. Hinzu kommen noch stark vernetzende Wirkungen und die "Carbonatisierung" der Zusammensetzung, was eine Schutzfunktion gegenüber äußeren Einflüssen, wie z.B. Nässe und Hitze, bewirkt. Darüber hinaus sorgt die Base für einen alkalischen pH-Wert der Zusammensetzung als Ganzes und somit bestmögliche Benetzbarkeit verschiedener damit zu beschichtender Werkstoffe sowie Resistenz gegenüber Schimmelpilz und anderen unerwünschten (weil frühzeitigen) Verrottungseinflüssen. Gleichzeitig wird sichergestellt, dass durch die in saurem Milieu, wie z.B. im Boden oder Erdreich, erfolgende Neutralisation der Effekt eintritt, dass die natürlichen Komponenten der Zusammensetzung mikrobiologisch aufgeschlossen werden können, was eine langsame natürliche Verrottung der aus der Zusammensetzung der Erfindung hergestellten Beschichtungen oder Gegenstände nach Deponierung derselben ermöglicht. Zudem reagieren Leichtmetalle mit alkalischen Systemen, so dass die erfindungsgemäße Zusammensetzung zur rutschhemmenden Ausrüstung von Leichtmetalloberflächen oder auch gleichzeitig als Bindemittel oder Klebstoff für weitere Kombinationen mit Leichtmetallen eingesetzt werden kann. Es sei auch nochmals festgehalten, dass alkalische Systeme Fette verseifen und somit Fetteinträge in der Rezeptierung als auch Fettspuren oder leichte Fett-Verschmutzungen an beschichtenden Flächen neutralisieren, was einen bedeutenden Vorteil für ein Beschichtungssystem darstellt und die Voraussetzung dafür bildet, Natur-Begleitstoffe wirkungsvoll einsetzen zu können.

Aus Kosten-, Verfügbarkeits- und Toxizitätsgründen wird als Base in der erfindungs-gemäßen Zusammensetzung Ca(OH)₂ und vorzugsweise zusätzlich NaOH oder KOH oder ein Gemisch davon eingesetzt, noch bevorzugter Ca(OH)₂ in Form von Sumpfkalk, besonders bevorzugt ein Gemisch aus Sumpfkalk und zumindest einem Alkalimetallhydroxid, insbesondere ein Gemisch aus Sumpfkalk und NaOH. Bei Verwendung eines solchen Gemischs sollte das Alkalimetallhydroxid (oder zumindest eines davon, falls mehrere vorhanden sind), das aus Kostengründen vorzugsweise NaOH ist, mit den tierischen und pflanzlichen Komponenten vorvermischt und gegebenenfalls erhitzt werden, um einen zumindest teilweisen Aufschluss dieser Komponenten herbeizuführen, bevor der Polymerlatex und anschließend der Sumpfkalk zugesetzt wird, wie nachstehend näher ausgeführt wird. Umfasst die Base ein Carbonat oder Hydrogencarbonat, mittels dessen die Wasserbeständigkeit erhöht werden kann, wird dieses vorzugsweise ebenfalls erst im letzten Mischschritt zugesetzt, um ein etwaiges Aufschäumen des Gemischs zu verhindern, falls dies nicht explizit gewünscht wird.

Polymerlatizes reagieren mitunter heftig und unverträglich mit starken Basen, und diese können zum Brechen der Dispersion oder Emulsion führen. Diese Wirkung kann durch die Komponenten a) und b) gehemmt bzw. verhindert werden, insbesondere, wenn als Base ein Gemisch aus Sumpfkalk und zumindest einem Alkalimetallhydroxid wie NaOH eingesetzt wird, wovon NaOH als Aufschluss- und Reaktionskomponente mit den Komponenten a) und b) vorvermischt wird, bevor der Polymerlatex und - gleichzeitig damit oder erst danach - der Sumpfkalk zugesetzt werden. Unter Sumpfkalk ist hierin eine Aufschlämmung, d.h. Suspension, von Ca(OH)₂ in Wasser zu verstehen. Die Verwendung von Sumpfkalk besitzt gegenüber jener von Löschkalk den Vorteil, dass Sumpfkalk keine ungelöschten Kalkanteile mehr enthält, die sich beim Vermischen der Komponenten der erfindungsgemäßen Zusammensetzung negativ auswirken könnten. Besonders bevorzugt ist daher die Verwendung eines Sumpfkalks, der zumindest drei Monate ruhen (d.h. mit Wasser ausreagieren) gelassen wurde, um das Calciumoxid vollständig zu Ca(OH)₂ umzusetzen.

Durch die Wahl der Basenkomponenten und ihrer Anteile in der erfindungsgemäßen Zusammensetzung können sowohl das Ausmaß des Aufschlusses der tierischen und pflanzlichen Bestandteile als auch der Vernetzungsgrad der enthaltenen Polymere gesteuert werden. Beispielsweise bewirken größere Anteile an NaOH, die zusammen mit den Komponenten a) und b) vorerhitzt werden, bevor Latex und Sumpfkalk zugesetzt werden, dass die Eigenschaften der tierischen Proteine und der pflanzlichen Polymere stärker zur Geltung kommen. Speziell anhand der Menge an Ca(OH)₂ lässt sich hingegen der Vernetzungsgrad und damit die Stabilität und Steifigkeit sowie das Quellvermögen und damit die Wasserbeständigkeit der gehärteten Zusammensetzung steuern, wie dies in den späteren Beispielen näher erläutert wird.

### Komponente d) - Polymerlatex

Als Polymerlatex der Komponente d) kommen prinzipiell alle verfügbaren wässrigen Dispersionen oder Emulsionen von Polymeren, vor allem Elastomeren und insbesondere Kautschuken in Frage. Da das im Latex dispergierte Polymer maßgeblich die Eigenschaften der aus der erfindungsgemäßen Zusammensetzung erzeugten rutschhemmenden Oberflächen und Gegenstände beeinflusst und relativ weiche, elastische Oberflächen als rutschhemmende Oberflächen zumeist zu bevorzugen sind, werden Kautschuklatizes, wie z.B. von Naturkautschuk (NR), Styrol-Butadien-Kautschuk (SBR), Isopren-Kautschuk (IR), Polybutadien (BR), Acrylnitril-Butadien-Kautschuk (NBR), Ethylen-Propylen-(Dien-)Kautschuk (EPM bzw. EPDM) usw., gemäß vorliegender Erfindung bevorzugt, um weitere Zusätze, wie z.B. Weichmacher, zu vermeiden, wobei durch die Wahl des Latex die Eigenschaften der rutschhemmenden Oberfläche wiederum variiert werden können. Aufgrund seines natürlichen Ursprungs, seiner Abbaubarkeit sowie der Weichheit und Gummi- oder Viskoelastizität des darin dispergierten Polyisoprens und der dadurch erzielbaren guten Adhäsion an anderen Oberflächen ist Naturlatex besonders bevorzugt als Polymerlatex in der Zusammensetzung der Erfindung enthalten.

Dieser ist zwar als solcher bekanntermaßen ohne Vernetzungskomponente nicht feuchte-, wasser- und hitzebeständig, weist eine viel zu hohe Elastizität auf Flächenbeschichtungen auf, ist durch rasche, oft unkontrollierte Filmbildung oder Aufschäumen nicht einfach zu verarbeiten, reagiert stark auf Umwelteinflüsse und verankert sich trotz hervorragender Benetzbarkeit nur sehr schwach an anderen Werkstoffen und Materialien. Diese Nachteile gegenüber anderen der in Frage kommenden Polymerlatizes können jedoch durch die geeignete Wahl weiterer Rezepturkomponenten wettgemacht werden.

Somit umfasst eine erfindungsgemäße Zusammensetzung zur Herstellung rutschhemmender Oberflächen in bevorzugten Ausführungsformen ausschließlich natürliche und auch natürlich abbaubare Komponenten, die zudem kostengünstig und auch gut rezyklierbar sind. Wie oben mehrfach ausgeführt wurde, sind die Eigenschaften, wie z.B. Flexibilität, Weichheit, Elastizität, Haftkraft und Quellvermögen, der gehärteten Zusammensetzung durch die geeignete Wahl der Art und der Mengen aller Komponenten a) bis d) in relativ weiten Bereichen einstellbar.

Was die Mengen der Komponenten anbelangt, umfasst die Zusammensetzung der Erfindung in bevorzugten Ausführungsformen:
a) 1 bis 25 Gew.-% tierisches Protein (berechnet als reiner Proteinanteil),
b) 1 bis 40 Gew.-% pflanzliche Polymere (wobei sich die Untergrenze auf den einen Polymeranteil und die Obergrenze auf die Menge einer pflanzlichen Polymerquelle beziehen),
c) 0,5 bis 50 Gew.-% Base (wobei sich die Untergrenze auf ein festes Pulver und die Obergrenze auf wässrigen Sumpfkalk beziehen) und
d) 5 bis 75 Gew.-% Polymerlatex (berechnet als Dispersion mit 50 % Feststoffanteil),
die zusammen jeweils 100 % ergeben.

Wie die nachstehenden Beispiele zeigen, sind innerhalb dieser bevorzugten Mengengrenzen die Eigenschaften der aus den erfindungsgemäßen Zusammensetzungen erhaltenen Beschichtungen oder Gegenstände stark variierbar und so an die jeweiligen Anforderungen an das rutschhemmende Produkt anpassbar. Diese Variabilität ist aber im Hinblick auf die Praxiseignung der aus der erfindungsgemäßen Zusammensetzung hergestellten rutschhemmenden Produkte auch durchaus erforderlich. Die beste rutschhemmende Beschichtung kann beispielsweise ihre Wirkung nicht entfalten, wenn sie nicht auf den Träger abgestimmt ist.

Die rutschhemmende Beschichtung hat nämlich nur die Aufgabe, die bestmögliche Kontaktfläche und Haftung zum Reibpartner sicherzustellen. Die frei werdenden Energien, die bei einer Bewegung des Reibpartners auftreten, müssen jedoch über die Kontaktfläche aufgenommen und in den Trägerwerkstoff selbst übertragen werden. Dabei ist es von Vorteil, wenn die rutschfeste Oberfläche elastisch ausgelegt ist, um die Benetzung und auch den Ausgleich von Unebenheiten der unterschiedlichen Reibpartner sicherzustellen. Zugleich ist jedoch darauf zu achten, dass die Kontaktflächen keine zu hohen Haftkräfte aufbauen, um unerwünschtes Verkleben zu vermeiden, parallel dazu aber auch nicht zu steif und unelastisch werden, um ein Abgleiten an der Kontaktfläche zu vermeiden. Mit weichen, flexiblen Oberflächenausrüstungen wiederum tritt die rutschhemmende Wirkung schon bei geringem Anpressdruck auf und erfordert nicht, wie bei härteren Oberflächen, einen Mindestdruck, um die notwendige Adhäsion aufzubauen. Weich-elastische Beschichtungen erreichen jedoch bei hohen Scherkräften rasch die Grenzen ihrer mechanischen Belastbarkeit und werden durch Zerstörung unwirksam oder delaminieren und lösen sich schlimmstenfalls sogar vom Trägerwerkstoff ab. Schaumstoffe oder geschäumte Oberflächen wiederum besitzen zwar den Vorteil einer weich-flexiblen sowie größtmöglichen aktiven Oberfläche, allerdings muss dabei eine ausreichend hohe innere Festigkeit der Zellstrukturen sichergestellt sein, um auch stärkeren Kräften unbeschadet standzuhalten und die einwirkenden Kräfte zu absorbieren und zu verteilen. Entscheidend ist daher, dass eine oberflächenaktive, den Anforderungen entsprechend flexible und am Trägermaterial fest verankerte Kontaktfläche sichergestellt wird.

Die rutschhemmende Wirkung von Beschichtungen ist daher umso stärker, je besser der Trägerwerkstoff die innere Reibung und damit die Energie aufnehmen und verteilen kann. Flexible Trägerstoffe benötigen hierzu eine ausreichend hohe innere Festigkeit, um die eigene Formstabilität auch bei hohem Energieeintrag zu gewährleisten. Hochelastische Produkte mit geringer innerer Reibung neigen unter Zuglast zum Überdehnen und bilden rasch eine Rolle aus, die plötzlich zum Versagen des Produkts führt. Viskoelastische Produkte haben sich als die besten und wirksamsten Medien für diesen Einsatzzweck erwiesen. Unflexible, starre Trägerstoffe benötigen hingegen deutlich wirksamere rutschhemmende Beschichtungen, um die Adhäsion zu verstärken, oder müssen über eine ausreichende Menge der Beschichtung (oder durch elastische Oberflächenaufbauten) die Energien gleichmäßig in den starren Träger übertragen und darin verteilen können.

Darüber hinaus sollte eine rutschhemmende Oberfläche zwar wasserbeständig, nicht aber wasserabweisend sein, da sich sonst zwischen der Oberfläche und dem Reibpartner ein Wasser-Gleitfilm ausbildet, der das Rutschen erst recht begünstigt, was in Fachkreisen "Silikon-Effekt" genannt wird.

Allerdings sind Ausführungsformen der erfndungsgemäßen Zusammensetzung-neben der Verleihung von rutschhemmenden Eigenschaften - auch durchaus dazu geeignet, damit beschichteten Oberflächen bzw. daraus hergestellten Gegenständen Wasserbeständigkeit und, falls gewünscht, auch wasserabweisende Eigenschaften zu verleihen. Zu diesem Zweck ist es erforderlich, die Vernetzung und Carbonatisierung, insbesondere mit Ca(OH)₂, zu erhöhen, was die Elastizität und die rutschhemmende Wirkung zwar weiter reduziert, aber parallel dazu die mechanischen Festigkeiten und die wasserbeständige Wirkung zunehmend erhöht. Ab einem Ca(OH)₂-Anteil von etwa 15 Gew.-% wird eine über Stunden wirksame, ab etwa 20 Gew.-% sogar eine dauerhafte Wasserfestigkeit erreicht.

Als besonders vorteilhaft haben sich derartige Rezeptur- und Qualitätsoptimierungen bei der Ausrüstung von Papier- und Papierprodukten gezeigt, wo der Zellstoff und die Stärkeanteile im Papier angelöst und im Aushärteprozess mitvernetzt werden, wodurch - neben einer höheren Festigkeitsstabilisierung - die Beständigkeit gegenüber Wasser, Feuchte und auch gegenüber der rasch einsetzenden Verrottung von Papier optimiert werden. Für Papier-Verpackungsprodukte, wo die Rutschfestigkeit aufgrund sonstiger Behinderung beim Handling nicht zu hoch sein darf, möglichst guter Schutz gegen Feuchtigkeit und Nässe aber natürlich dennoch anzustreben ist, lassen sich mit erfindungsgemäßen rutschhemmenden Beschichtungs- und Bindemittelmassen auf relativ einfache Weise Verbesserungen und Lösungen dieser Problematik erzielen.

Auch stark vernetzte Produkte behalten dabei ihre biologischen Eigenschaften bei, es verlängern sich nur, je nach äußeren Gegebenheiten, mitunter die für die biologischen Abbauprozesse benötigten Zeiträume.

Die vorliegende Erfindung bietet aufgrund der großen Bandbreite an einstellbaren Eigenschaften der gehärteten Zusammensetzungen dem Fachmann die Möglichkeit, ohne übermäßiges Experimentieren unter Befolgung der hierin offenbarten Lehren aus den verschiedenen (bevorzugten) Ausführungsformen der Erfindung die geeignetste rutschhemmende Beschichtung für jedes beliebige Trägermaterial zu entwickeln.

In einem zweiten Aspekt betrifft die Erfindung ein Verfahren zur Herstellung einer Zusammensetzung gemäß dem ersten Aspekt, wie oben beschrieben, durch Vermischen der Komponenten a) bis d), wobei in einem ersten Mischschritt zunächst die Komponenten a) und b) mit zumindest einem Teil von Komponente c) vermischt werden, bevor in einem zweiten Mischschritt Komponente d) zugesetzt wird. Der gegebenenfalls vorhandene Rest von Komponente c) wird entweder gleichzeitig mit Komponente d) im zweiten Mischschritt oder erst danach in einem dritten Mischschritt eingemischt. Beim Vermischen der Komponenten a) bis c) im ersten Mischschritt wird vorzugsweise zunächst die Komponente a) mit Komponente c) (oder einem Teil davon) vermischt und dann erst Komponente b) eingemischt.

Wie bereits erwähnt wurde, verhindert diese Reihenfolge des Vermischens der Komponenten wirkungsvoll Unverträglichkeiten zwischen den einzelnen Komponenten, insbesondere zwischen dem Polymerlatex und der Basenkomponente oder Teilen davon.

Beim Vermischen eines Teils der oder auch der gesamten Basenkomponente c), z.B. von NaOH, mit den tierischen und pflanzlichen Komponenten a) und b) werden diese zum Teil aufgeschlossen und vorvemetzt, wodurch sie in der Folge wirkungsvoll verhindern können, dass sich Bestandteile des Polymerlatex im nachfolgenden dritten Mischschritt vom Rest des Gemischs absetzen. Dadurch, dass im ersten Mischschritt zunächst Komponente a) mit Komponente c) oder einem Teil davon vermischt wird, bevor Komponente b) zugesetzt wird, wird bewirkt, dass im Zuge des thermischen Aufschlusses der Stärkebestandteile das Koagulieren/Ausflocken der Proteine unter Temperatureinfluss vermieden wird.

Speziell wenn Komponente c) sowohl Ca(OH)₂ als auch zumindest ein Alkalimetallhydroxid, wie z.B. NaOH, umfasst, ist es vorteilhaft, das zumindest eine Alkalimetallhydroxid im ersten Mischschritt mit den Komponenten a) und b) zu vermischen und das Ca(OH)₂ erst im zweiten oder, noch besser, erst im dritten Mischschritt einzumischen, um unerwünschte Reaktionen zwischen Ca(OH)₂ und dem Latex zu verhindern. Umfasst die Basenkomponente c) Hydrogencarbonate oder Carbonate von Erdalkalimetallen oder Alkalimetallen, wovon Alkalimetallhydrogencarbonate bevorzugt sind, werden diese vorzugsweise ebenfalls erst im zweiten oder dritten Mischschritt eingemischt, um, wie erwähnt, ein Aufschäumen des Gemischs zu verhindern, falls dies nicht gezielt gewünscht wird. Für wasserbeständige rutschhemmende Oberflächen erfolgt die Zugabe von (zusätzlichem) Ca(OH)₂ oder Carbonaten regelmäßig erst im letzten Mischschritt, wobei auf klumpenfreie Dispergierung mit geeigneten Rührwerken zu achten ist.

Der zumindest teilweise Aufschluss und die Vorvernetzung der Komponenten a) und b) durch die Base kann deutlich verstärkt werden, indem das Gemisch aus den Komponenten a), b) und zumindest einem Teil von c) zwischen dem ersten und dem zweiten Mischschritt auf Siedetemperatur erhitzt wird, wonach der dritte Mischschritt, d.h. das Einmischen des Latex, erfolgt, gegebenenfalls gefolgt von einem vierten Mischschritt, d.h. dem Einmischen von Ca(OH)₂ oder Carbonaten. Dies bewirkt auch eine deutlich verlängerte Lagerbarkeit der erfindungsgemäßen Zusammensetzung, die monatelang stabil bleibt, während eine ohne den Zwischenschritt des Erhitzens vermischte Zusammensetzung rasch, d.h. vorzugsweise innerhalb von 1 bis 2 Tagen, weiterverarbeitet werden muss, da sonst Phasentrennungsphänomene auftreten können, die weitere Stabilisierungsmaßnahmen und zusätzlichen Materialeintrag erzwingen.

Erfolgt kein gewolltes Erhitzen des Gemischs zwischen dem ersten und dem zweiten Mischschritt, sondern wird in das Gemisch aus den Komponenten a), b) und c) direkt der Latex als Komponente d) - und danach gegebenenfalls der Rest von Komponente c) - eingemischt, sollte die so erhaltene Zusammensetzung bei der anschließenden Herstellung einer rutschfesten Oberfläche auf einem Träger bzw. eines Gegenstands mit rutschfester Oberfläche auf Siedetemperatur oder höher erhitzt werden, um den Aufschluss und die Vernetzung zu vervollständigen und die Zusammensetzung zu einem festen, trockenen Film oder Gegenstand zu verfestigen.

Ist hingegen bereits das Gemisch vollständig aufgeschlossen, vorvemetzt und aus allen gewünschten Komponenten und Rezepturbestandteilen zusammengesetzt, bietet sich die Möglichkeit, die Zusammensetzung als Beschichtungsmasse oder Bindemittel bei Raumtemperatur beginnend (d.h. ab 20 °C) bis hin zu hohen Temperaturen von 200 °C zu trocknen und auszuhärten. Dieser breite Temperaturbereich erlaubt, die bestehende Ausrüstung auch ohne weiteres technisches Equipment und ohne aufwändige Technologie wirksam zu verwenden. Daher ist eine solche Beschichtungs- und Bindemittelmasse speziell dafür geeignet, auch temperaturempfindliche Werkstoffe, wie z.B. EPS oder XPS, rutschhemmend auszurüsten. Die Temperatur sollte bei EPS- und XPS-Schaumstoffen bei Umluft- oder Kontaktwärme vorzugsweise nicht über 70 °C, noch bevorzugter nicht über 65 °C, ansteigen, um keine unerwünschte Zersetzung oder ungewollte Schrumpfprozesse auszulösen. Für andere Trägerwerkstoffe oder Zusammensetzungskomponenten kann der thermische Trocknungs- und Aushärteprozess an deren jeweiligen Eigenschaften angepasst werden, wobei Temperaturen von vorzugsweise nicht über 200 °C, noch bevorzugter nicht über 160°C, gewählt werden, um keinen vorzeitigen und unerwünschten thermischen Abbau oder Zersetzung irgendwelcher der Komponenten zu bewirken.

In einem dritten Aspekt betrifft die vorliegende Erfindung somit die Verwendung einer Zusammensetzung gemäß dem ersten Aspekt als Beschichtungsmasse zur Herstellung rutschhemmender Oberflächen auf Trägem bzw. als Formmasse zur Herstellung von Gegenständen mit rutschhemmender Oberfläche bzw. als Bindemittel zur Herstellung von Gegenständen mit rutschhemmender Oberfläche.

Der erste Fall bezieht sich dabei auf eine Zusammensetzung, die auf einen Träger, wie z.B. Papier, Karton, Metall (vor allem Leichtmetall), Holz oder Kunststoff, aufgetragen und aufgehärtet wird, um diesen Träger rutschhemmend auszurüsten, wobei die Art des Auftragens nicht speziell eingeschränkt ist. Somit können unter anderem beispielsweise herkömmliche Verfahren der Rakel-, Sprüh-, Tauch-, Druck-, Streichoder Transferbeschichtung angewandt werden, solange die jeweilige Viskosität der erfindungsgemäßen Zusammensetzung es zulässt.

Die beiden weiteren Fälle beziehen sich auf die Herstellung von dreidimensionalen Körpern aus der erfindungsgemäßen Zusammensetzung, z.B. durch Formgießen, wobei lediglich das Ausmaß, in dem weitere Komponenten zugesetzt werden, variiert. Bei Verwendung als Formmasse besteht der so gebildete Körper hauptsächlich oder sogar im Wesentlichen aus der erfindungsgemäßen Zusammensetzung, obwohl natürlich übliche Zusätze wie etwa Farbstoffe, Weichmacher, Verdickungsmittel, Mischhilfen usw. in relativ geringem Ausmaß enthalten sein können. Bei Verwendung als Bindemittel werden der erfindungsgemäßen Zusammensetzung weitere Mittel, wie z.B. Füllstoffe, in größerem Ausmaß zugesetzt. Es versteht sich jedoch, dass der Übergang zwischen der Verwendung als Formmasse und jener als Bindemittel fließend ist. Als spezielle Füllstoffe seien hierin Korkgranulat, rezykliertes oder neu gefertigtes Polystyrol in Form von EPS (expandiertes Polystyrol, z.B. Styropor^{®}) und aufbereitete Polyurethanschaumstoffe erwähnt, die - gegebenenfalls nach einer Vorreinigung und Grobzerkleinerung - in eine als Bindemittel dienende erfindungsgemäße Zusammensetzung eingearbeitet und zu einem speziellen leichtgewichtigen und rutschhemmenden Produkt gehärtet werden können.

Bei Verwendung des Naturprodukts Kork, was eine der besonders bevorzugten Ausführungsformen der vorliegenden Erfindung darstellt, sind die viskoelastischen Eigenschaften des Bindemittels dem natürlichen Füllstoff anzugleichen, um eine dauerhafte Nutzung (z.B. in Mehrfachanwendungen) einer rutschfesten Oberfläche, daraus zu gewährleisten. Das Gemisch aus erfindungsgemäßem Bindemittel und Korkgranulat kann sowohl thermisch aufgeschlossen und vorvernetzt werden als auch ohne diese Vorbehandlung durch einfaches Zusammenmischen in der beschriebenen und aufgezeigten Reihenfolge erstellt werden. Bei vorvernetzten Ansätzen ist ein thermischer Verarbeitungsprozess, wie oben erwähnt, nicht zwingend erforderlich. Aus wirtschaftlichen und auch aus Kapazitätsgründen in einer kontinuierlichen Fertigung kann die thermische Unterstützung zur raschen Aushärtung und Trocknung frei gestaltet und den Gegebenheiten frei angepasst werden. Nicht vorvernetzte und aufgeschlossene Ansätze sollten im Verarbeitungsprozess einem thermischen Prozess über 100 °C unterworfen werden, um im Zuge der Formgebung die noch nicht abgeschlossenen Reaktionen der Einzelstoffe und die Aufschließung wichtiger Bestandteile in diesem Arbeitsschritt sicherzustellen. Dieses offene System bietet den Vorteil, in bestehende thermische Verarbeitungsprozesse - ohne weitere Zusatzschritte - übertragbar zu sein und mit geringstmöglichem Aufwand sehr wirtschaftliche Bindemittelsysteme mit entsprechenden Eigenschaften einzusetzen. Es sei nochmals bemerkt, dass nicht aufgeschlossene und nicht vernetzte Ansätze nur eingeschränkte Lagerfähigkeit und Stabilität besitzen und zeitnah, vorzugsweise innerhalb weniger Tage, verarbeitet werden sollten.

Das Mischungsverhältnis zwischen Korkgranulat und Bindemittel wird dabei von vier Faktoren bestimmt:
1. Granulatgröße: Je geringer die Granulatgröße, umso mehr Bindemitteleinsatz ist erforderlich.
2. Verdichtungsgrad: Je höher die Verdichtung im Endprodukt, umso geringer ist der Bindemittelbedarf.
3. Wirkung: Je höher die Bindemittelkonzentration, umso stärkere rutschhemmende Wirkung an den Oberflächen und umso höhere innere Festigkeit sind erzielbar.
4. Materialdicke und Größe des Endprodukts: Je dicker und größer das Endprodukt, umso geringer der Bindemittelbedarf, da sich die einwirkenden Kräfte auf größere Flächen und Volumina verteilen.

Wie in den späteren Beispielen noch näher beschrieben wird, können zur Herstellung einer 3 mm dicken, rutschfesten und dauerhaft stabilen Korkgranulatplatte beispielsweise 70 Gew.-% Korkgranulat mit 2-3 mm Korngröße mit 30 Gew.-% Bindemittel vermischt werden. Das so erhaltene Gemisch wird beispielsweise in einem Plattenwerkzeug zur Entfernung des Großteils des Wassers verdichtet, z.B. in einem Verhältnis zwischen 2:1 und 5:1, und anschließend mittels der Kontaktheizung des Werkzeugs für die erforderliche Zeitspanne auf die gewünschte Trocknungstemperatur erhitzt. Bewährt haben sich hierbei folgende Kombinationen: 80 °C für 7 Minuten, 100 °C für 5 Minuten und 130 °C für 3 Minuten. Die exakte Auswahl der Trocknungsbedingungen hängt unter anderem von der Wärmeempfindlichkeit der Bindemittel-komonenten, dem Wassergehalt der Zusammensetzung und der Werkzeugauslegung bei der Herstellung der Platten oder sonstigen Formteile ab.

Kork ist ein "saugendes Produkt", so dass beim Vermischen mit dem Bindemittel ein Teil des Wassers vom Kork selbst aufgenommen wird. Daher ist es entscheidend, die Elastizität des Bindemittels den Korkeigenschaften anzupassen. Mit weiterer Optimierung der Fertigungstechnik lassen sich deutlich kürzere Produktionszeiten und weitere wirtschaftliche Potentiale realisieren. Das Produkt ist nach seiner Anwendung wiederverwertbar, indem es erneut granuliert wird, wonach mit demselben oder einem optimierten Bindemittel neue Teile daraus gefertigt werden können. Jeder Recyclingzyklus wird vorteilhafter, weil das Korkgranulat bereits mit den Wirkstoffen gekapselt, d.h. umhüllt, ist und so die bei der Wiederverwertung benötigte Bindemittelmenge deutlich reduziert werden kann, z.B. um bis zu 70 % oder mehr.

Mit einem neuen Bindemittel gefertigte Korkprodukte werden durch zusätzlich neue Eigenschaften qualitativ aufgewertet. Neben der rutschfesten Ausrüstung, die im Verpackungsbereich und in der Ladungssicherung ein wichtiges und entscheidendes Thema ist, wird jedes Korkgranulatkorn mit dem Bindemittel umhüllt und gekapselt, was zur Folge hat, dass der typische Kork-Geruch stark reduziert wird. Hinzu kommt, dass die auf optimale Benetzbarkeit getrimmte Beschichtungs- und Bindemittelmasse mit anderen Werkstoffen schon im Herstellungsprozess (d.h. in einem "One-Step-Verfahren") zu weiteren, aufgewerteten Produkten führt.

Eine weitere besonders bevorzugte Ausführungsform der Erfindung ist die Verwendung der erfindungsgemäßen Zusammensetzung als Bindemittel für Polystyrolschaum-Granulat als Füllstoff, wobei es sich vorzugsweise um Recycling-Polystyrol-schaum handelt. Für diese Anwendung sollten die Anteile elastizitätsmindernder Bestandteile, wie z.B. von Stärke und/oder vernetzenden Reaktionskomponenten wie CaOH₂, verringert werden, um die Eigenschaften des Bindemittels an das viskoelastische Produkt Polystyrolschaum anzupassen und zugleich eine ausreichende innere Festigkeit der Bindung und des Gesamtsystems sicherzustellen. Auf die Produktcharakteristika von Polystyrolschaum, wie z.B. die geringe thermische Belastbarkeit und die Nicht-Saugfähigkeit, ist in Form einer geringeren Viskosität und einer möglichst hohen Benetzungsfähigkeit des Bindemittels Rücksicht zu nehmen, was am besten durch Optimierung der Konzentrationen von Milchprotein und Latex erfolgen kann.

Im Bindemittel sollten sämtliche Komponenten vollständig thermisch aufgeschlossen und vorvemetzt sein. Die thermische Verarbeitung von Polystyrolschaum sollte auf etwa 65 °C, kurzzeitig auf maximal 70 °C limitiert werden, um Zerfall oder Schrumpfprozesse des Polystyrolschaums zu vermeiden. Bei Verwendung von Recycling-Polystyrolschaum werden die Vorteile der Erfindung besonders gut erkennbar, da hier durch die Verwendung einer erfindungsgemäßen Zusammensetzung als Bindemittel eine wirtschaftliche und sinnvolle Wiederverwertung eines Abfallprodukts sowie die Schaffung neuer Polystyrolschaumqualitäten ermöglicht werden. Die gefertigten Produkte besitzen sehr hohe innere Festigkeiten, ausreichende Elastizität und je nach Konzentration des Bindemittels in der Fertigung eine bandbreite von schwacher bis hin zu sehr starker rutschhemmender Wirkung an den Außenflächen von daraus gefertigten Platten.

Zur Herstellung einer 3 mm dicken, rutschfesten und stabilen Polystyrolschaumplatte werden beispielsweise 50 Gew.-% Polystyrolschaumgranulat mit 2-3 mm Korngröße mit 50 Gew.-% Bindemittel vermischt, was einem Volumsverhältnis von rund 95 % Füllstoff und 5 % Bindemittel entspricht), wobei jedoch das Verhältnis je nach den gewünschten Produkteigenschaften und eingesetzter Korngröße auch stark schwanken kann. Ähnlich wie bei der Herstellung von Korkgranulatplatten werden die so erhaltenen Gemische aus Bindemittel und Schaumgranulat in einem Plattenwerkzeug verdichtet, wiederum z.B. auf Werte zwischen 2:1 und 5:1, und anschließend getrocknet.

Wie oben erwähnt ist die Trocknungstemperatur durch die Eigenschaften des Polystyrolschaums limitiert, weswegen nach kurzzeitigem Erwärmen oder Erhitzen die Restfeuchte üblicherweise durch Trocknung bei Raumtemperatur mittels der Umgebungsluft oder in einem umluftgeführten Trocknungskanal oder auch einem Umluftofen (mit oder ohne Heizung) entfernt werden muss.

Bewährt haben sich hierfür folgende Vorgangsweisen:
a) Trocknung bei 25-30 °C für 5 Minuten im Formwerkzeug unter Druck; Ablüftung der Restfeuchte bei Raumtemperatur für ca. 30-45 Minuten.
b) Trocknung bei 65 °C für 5 Minuten im beheizten Formwerkzeug; Ablüftung der Restfeuchte bei Raumtemperatur für 15-20 Minuten.
c) Trocknung bei 70 °C für 3 Minuten im beheizten Formwerkzeug; Ablüftung der Restfeuchte bei ca. 50°C für 3-4 Minuten.

Wie oben für Korkgranulat erwähnt lassen sich durch weitere Optimierungen der Fertigungstechnik deutlich kürzere Produktionszyklen und weitere wirtschaftliche Potentiale realisieren. Auch erfindungsgemäße Polystyrolschaumplatten sind nach (vorzugsweise mehrmaligem) Gebrauch in ähnlicher Weise wie Korkgranulatplatten durch erneutes Granulieren und Binden wiederverwertbar. Wiederum kann durch die bereits gegebene Umhüllung eines zum wiederholten Male granulierten Polystyrolgranulats mit Bindemittelkomponenten die für die erneute Bindung benötigte Bindemittelmenge deutlich reduziert werden, z.B. um bis zu 50 % oder mehr.

Auch in diesen Fällen sind beim Recycling neue Produkteigenschaften und -qualitäten erzielbar. Durch die Umhüllung jedes Polystyrolschaumkorns mit dem Bindemittel sind darin enthaltene leicht flüchtige Bestandteile, wie z.B. Restmonomere, dicht eingeschlossen, wodurch der Polystyrolschaum weitgehend emissionsfrei wird. Hinzu kommt, dass eine auf optimale Benetzbarkeit getrimmte "Kapselung" des Polystyrolschaums den Schaum gegenüber äußeren Einflüssen stabilisiert, wodurch dieser beispielsweise mit nahezu beliebigen Klebstoffen verklebbar wird, was für herkömmliches geschäumtes Polystyrol keineswegs zutrifft. Ergänzend dazu bieten sich neue Möglichkeiten, Polystyrolschaum-Mischungen mit andern Werkstoffen zu kombinieren und/oder auch im Herstellungsprozess (also wiederum in einem "One-Step-Ver-fahren") Mehrschichtsysteme zu verwirklichen, wie z.B. mit Zwischenlagen verstärkte mehrlagige Polystyrolschaumplatten.

In weiteren Anwendungsbeispielen können beispielsweise nicht vorvemetzte und thermisch aufgeschlossene Zusammensetzungen anstelle von (daher ebenfalls nicht aufgeschlossenem) Getreidemehl das bereits thermisch aufgeschlossene Produkt Paniermehl enthalten. Dieses ist speziell bei Rezepturen mit Natriumhydrogencarbonat NaHCO₃ oder "Hirschhornsalz", d.h. Ammoniumcarbonat (NH₄)₂CO₃ bzw. -hydrogencarbonat NH₄HCO₃, als Base vorteilhaft, da hier durch thermische Einflüsse der Zerfall und die Gasentwicklung (CO₂), speziell bei Hydrogencarbonaten, gestartet werden. Die damit einhergehende Schäumung während der Beschichtungs- und Bindemittelherstellung ist entweder gänzlich unerwünscht oder, falls ein geschäumtes Produkt angestrebt wird, wird zumindest vorzeitig ausgelöst, weswegen bei Zusammensetzungen, die solche Basenkomponenten enthalten, kein thermischer Aufschluss vor Zusatz des Latex erfolgen kann. Die Verwendung von Paniermehl, also eines bereits aufgeschlossenen Getreideprodukts, löst dieses Problem. Im Endprodukt ist die Wirkung von Paniermehl mit jener von thermisch aufgeschlossenem Getreidemehl vergleichbar.

Alternative tierische und pflanzliche Proteine und Polymere bzw. Quellen derselben, darunter z.B. Gelatine, Soja, Reis, Kartoffel, Mais, Erbsen, Bohnen, Eier sowie tierische und pflanzliche Abfallprodukte und Reststoffe, wurden in zahlreichen Rezeptierungsversuchen getestet und haben die Wirkungsweise der vorliegenden Erfindung ausnahmslos bestätigt. Es ist somit problemlos möglich, die in den nachfolgenden Rezepturbeispielen eingesetzten Komponenten a) und b) durch alternative tierische und pflanzliche Proteine und Polymere, und dabei vorzugsweise durch reine Naturprodukte, auszutauschen. Der Fachmann kann anhand der hierin enthaltenen Offenbarung und Lehre durch entsprechende Versuche in einfacher Weise und ohne übermäßiges Experimentieren die jeweiligen Auswirkungen alternativer Naturstoffe auf die Eigenschaftsprofile erfindungsgemäßer Zusammensetzungen bestimmen und die Mischungsverhältnisse der vier Komponenten entsprechend optimieren.

Beispielhaft wurden anstelle der in den Ausführungsbeispielen angeführten Vertreter (d.h. Milchprodukte und Hautleim) wasserlösliche tierische Proteinquellen wie Gelatine, Eiklar (Eiweiß) und reines Casein eingesetzt, die nach Aufschluss mit Base vergleichbare dispergierende Eigenschaften besitzen und in Kombination mit den pflanzlichen Polymeren zu Beschichtungs- und Bindemittelmassen mit rutschhemmenden Wirkungen compoundiert werden können. Die Wirkungsweise dieser anderen tierischen Proteine ist mit Milchprotein weitgehend vergleichbar, wobei in allen Fällen vordergründig und bewusst die dispergierende Wirkung in ansonsten unverträglichen Komponentenmischungen, die Verbesserung der Benetzbarkeit durch die hydrophil-hydrophobe Molekülstruktur der Proteine und die mehr oder weniger stark ausgeprägte Klebrigkeit und innere Festigkeit eingesetzt und genutzt werden. Es ist zwar kaum möglich, ein bestimmtes tierisches Protein, z.B. Milchprotein, in einer bestehenden Rezeptierung ohne jegliche sonstige Anpassung der Rezeptur 1:1 durch ein anderes zu ersetzen. Die unterschiedlichen Eigenschaften der tierischen Proteine können aber durch die Wahl der übrigen Zusammensetzungskomponenten, durch Zusatz weiterer, ergänzender Proteine und/oder durch Änderungen der Proteinkonzentration in der Rezeptur Berücksichtigung finden. Die Qualitätsunterschiede der tierischen Proteine können auch bewusst dazu genutzt werden, das gewünschte Endprodukt weiter zu optimieren bzw. in gewünschte Richtungen zu verändern oder andere Eigenschaften zusätzlich zur Rutschhemmung zu verleihen.

Um die Differenzierung und Auswirkung anderer tierischer Proteine zu verdeutlichen und dem Fachmann Richtlinien für deren Verwendung in erfindungsgemäßen Rezeptierungen zu geben werden die folgenden beispielhaften Vertreter angeführt und mit den Rezeptierungen der späteren Ausführungsbeispiele verglichen, die Milch, Quark und Hauteim als tierische Proteinquelle enthalten.

Gelatine: Gelatine ist ein partiell hydrolisiertes Kollagen aus tierischen Bindegewebeeiweiß und findet als Proteinleim und Verdickungsmittel vielfältig technische Anwendung. Gelatine ist schon in geringen Mengen (ab ca. 1 %) in Wasser stark verdickend/gelierend und verliert bei Temperaturen ab ca. 50 °C (reversibel) ihre Viskosität. Ihre amphoteren Eigenschaften ermöglichen sowohl Reaktionen im saurem als auch in alkalischen Milieu und unterstützt somit im besonderen Maße die ausgeprägte starke Benetzbarkeit unterschiedlicher Werkstoffe und Materialien mit einer erfindungsgemäßen Zusammensetzung. Mit Alkalimetallhydroxiden aufgeschlossene und vernetzte Gelatine verliert ihre gelierende Wirkung bei Raumtemperatur und kann problemlos analog zu aufgeschlossenem Milchprotein verarbeitet werden. Die dispergierende Wirkung in der Materialmischung ist mit jener anderer tierischer Proteine vergleichbar. Die Klebrigkeit bzw. die Klebekraft ist im Vergleich zu Milchproteinen oder anderen Proteinleimen (wie z.B. Hautleim, Knochenleim) merklich geringer. Aufgeschlossene, vernetzte und in der Zusammensetzung gehärtete Gelatine führt zu sehr harten und spröden Produkten, die in Anbetracht einer vorzugsweise bewusst elastisch zu haltenden Rezeptierung die Nutzung von Gelatine nur dann sinnvoll erscheinen lässt, wenn der Gelatine-Anteil im Vergleich zu jenem von Milchprotein reduziert wird und/oder andere Zusammensetzungskomponenten, wie z.B. die Proteine und/oder Polysaccharide aus pflanzlichen Quellen, angepasst werden.

Eine entsprechend dem späteren Beispiel 2 hergestellte Beschichtungs- und Bindemittelmasse, in der das Milchprotein durch äquivalente Mengen an Gelatine als Protein ersetzt ist, führt zu gehärteten Beschichtungen oder Gegenständen, die weniger Elastizität besitzen und geringere Adhäsionskräfte entwickeln.

Hautleim (Glutin-Warmleim): Hautleime und Knochenleime sind hochwirksame, elastische und gegenüber Alterungsprozessen beständige Kollagen-Produkte. Aufgrund ihrer hohen Schutzkolloidwirkung werden sie gezielt als Dispergierhilfsmittel industriell genutzt. Glutin-Leime sind bei der Herstellung rutschfester Werkstoffmischungen und Gummierungen eine hochwirksame und effiziente Alternative zu Milchproteinen. Die Klebekraft, die Benetzbarkeit und die innere Festigkeit werden merklich unterstützt, und das gummielastische Verhalten kann durch Zusatz von mehrwertigen Alkoholen, wie z.B. Glycerin, und/oder Zucker weiter optimiert werden. Bei Verwendung solcher Leime kann der Anteil an pflanzlichen Polymeren, falls gewünscht, deutlich reduziert werden, und aufgrund ihrer Wasserfestigkeit und -beständigkeit bei Vernetzung mit anderen oder zusätzlichen Gerbstoffen (wie z.B. Tannin) können rutschfeste Oberflächen wasserfest ausgerüstet werden.

Eine entsprechend dem späteren Beispiel 2 hergestellte Beschichtungs- und Bindemittelmasse, in der das Milchprotein durch äquivalente Mengen an Hautleim als Protein ersetzt ist, ergibt vergleichbare Beschichtungs- und Bindemittelmassen, die im gehärteten Zustand tendenziell sogar eine bessere Haftung und Adhäsion an Kontaktflächen entwickeln. Komplizierter als bei Milchprotein sind jedoch die Verarbeitbarkeit, d.h. das Anquellen, Auflösen/Aufschmelzen des Leims unter Temperatureinwirkung, die wasserfeste Vernetzung im Latexsystem sowie die Änderungen der Eigenschaften bei starkem Klimawechsel. Jedenfalls hat sich Hautleim, wie in den Beispielen 4 und 5 gezeigt wird, als Quelle tierischen Proteins durchaus bewährt.

Casein: Casein zeigt, wenn es in zu Milch und Milchprodukten analoger Verdünnung eingesetzt wird, die ähnlichsten Eigenschaften und und Prüfergebnisse wie die in den Beispielen angeführten Rezepturen. Einzig die dispergierende Wirkung ist geringfügig schwächer ausgeprägt, was auf die in den Milchrezepturen enthaltenen verseiften Fette und Begleitinhaltsstoffe zurückgeführt wird, die bei Casein natürlich fehlen. Den Vorteilen der genau definierten und gleichmäßigen Qualität von Casein, der frei einstellbaren Proteinkonzentration bei der Verarbeitung und auch der Lagerbarkeit der Proteinquelle stehen wirtschaftliche Nachteile aufgrund des höheren Aufwands bei der Verarbeitung und der höheren Rohstoffkosten für das gereinigte und konzentrierte Milchprotein gegenüber. Aus qualitativer Sicht sind nur geringe Rezepturanpassungen erforderlich, um Milchprodukte durch konzentriert verfügbares Casein zu ersetzen. In Summe liegen aus wirtschaftlichen Gründen und aufgrund der einfachen unkomplizierten Verfügbarkeit und Verarbeitung die entscheidenden Vorteile bei der Verwendung von Milchprodukten als Proteinquelle.

Eiklar: Eine hochwertige Proteinquelle, die weitgehend fettfrei ist und aus unterschiedlichen Proteinen mit ca. 11 % Proteinanteilen zusammengesetzt ist. Die dispergierenden und festigenden Eigenschaften sind wie bei allen tierischen Proteinen ausgeprägt, aufwändige Verarbeitung und wirtschaftliche Nachteile gegenüber den Milchproteinen ergeben insgesamt jedoch keine zusätzlichen Vorteile bei der Herstellung von rutschfesten Beschichtungs- und Bindemittelrezepturen. Bemerkt sei, dass in Kombination mit Alkalimetallhydroxyden eine starke, auf Dauer instabile Gelbildung auftritt, die vor der weiteren Verarbeitung und Beimischung weiterer Komponenten durch kurzes Erhitzen auf maximal 65-70 °C wieder aufgehoben werden kann, wonach die Zusammensetzung nicht mehr geliert.

Eidotter: Der Eidotter enthält im Vergleich zu Eiklar/Eiweiß neben einer höheren Proteinkonzentration auch hohe Anteile an tierischem Fett (ca. 30 %), die mit höheren Konzentrationen an alkalischen Aufschluss- und Vernetzungsmitteln verseift werden müssen, die emulgierende Wirkung in der Mischung aber deutlich verstärken. Zu hohe (aufgeschlossene) Fettanteile in der Gesamtrezeptur (ab ca. 3 %) reduzieren die Feuchte- und Wasserbeständigkeit, die Klebrigkeit und die Haftwirkung im Endprodukt jedoch erheblich und verringern die innere Festigkeit der gehärteten Produkte. Dem kann zwar unter anderem durch Zusatz anderer Proteine und pflanzlicher Polymere begegnet werden, so dass auch Eidotter in nennenswerten Anteilen in erfindungsgemäßen Rezepturen eingesetzt werden kann. Für die Erzeugung rutschfester und wasserbeständiger Oberflächen ist die Verwendung von Eidotter jedoch problematischer, aufwändiger und unwirtschaftlicher als jene anderer Proteinquellen. Eidotterprotein ist daher vor allem dann eine wertvolle proteinhältige Rezepturkomponente für rutschhemmende Produkte, wenn es in verhältnismäßig geringer Konzentration bewusst als eigenschaftsverbessernder Nunancier-Hilfsstoff eingesetzt wird.

Bezüglich der Auswirkungen verschiedener pflanzlicher Ausgangsprodukte werden nachstehend zur Illustration - wiederum als Richtschnur für den Fachmann bei deren Verwendung in erfindungsgemäßen Zusammensetzungen - mehrere bevorzugte Vertreter angeführt und mit den Rezeptierungen der späteren Ausführungsbeispiele verglichen, die als besonders bevorzugte pflanzliche Komponente Weizenmehl enthalten.

Roggenmehl: Bei Verwendung von Roggenmehl, das kein Klebereiweiß und einen geringeren Stärkeanteil enthält, anstelle von Weizenmehl wird bei gleicher sonstiger Rezepturzusammensetzung eine in ihrer Konsistenz und Wirkung vergleichbare Beschichtungs- und Bindemittelmasse erhalten, die sich hauptsächlich dadurch unterscheidet, dass die rutschhemmende und die vernetzende Wirkung etwas schwächer ausgeprägt sind. Dennoch haftet auch eine solche Zusammensetzung als Beschichtung auf saugenden oder offen-porösen Werkstoffe ausreichend gut auf der Unterlage. Glatte und geschlossene Oberflächen werden zwar ebenfalls gut benetzt, die Haftung darauf ist jedoch schwächer und kann bei einigen Werkstoffen, wie z.B. Kunststoffen, mitunter nicht ausreichen, falls nicht entsprechende Zusatzmaßnahmen getroffen werden, wie z.B. Änderung der Zusammensetzung der tierischen Proteine oder Erhöhung ihres Anteils.

Kartoffelmehl: Bei ansonsten gleicher Rezepturzusammensetzung wie in den Beispielen wird mit Kartoffel- statt Weizenmehl eine deutlich viskosere und zähere Beschichtungs- und Bindemittelmasse erhalten, deren Elastizität nach dem Trocknungsund Aushärteprozess sehr stark verringert ist und die auch merklich stärker vemetzt ist. Alkalisch aufgeschlossenes Kartoffelmehl bleibt in seiner Struktur leicht "grießig" und bildet im thermisch unterstützten Aufschluss keinen homogenen gleichmäßigen Film. Mit entsprechenden Rezepturoptimierungen, wie z.B. Reduzierung des Kartoffelmehlanteils und Anpassung der übrigen Reaktionskomponenten, lassen sich auch mit Kartoffelmehl gezielte Produkteigenschaften für rutschfeste Beschichtungs- und Bindemittelmischungen erstellen.

Erbsenmehl: Erbsenmehl verhält sich sehr ähnlich zu Kartoffelmehl und unterscheidet sich nur durch den etwas höheren Proteinanteil, der zu einem geringfügig elastischeren Verhalten im Endprodukt führt als Kartoffelmehl-Rezepturen.

Mais- und Reismehl: Mais- und Reismehl besitzen ähnliche Eigenschaften wie Weizenmehl. Beide lassen sich thermisch sehr gut aufschließen, führen zu gleichmäßigen und homogenen, hochviskosen, gut vernetzbaren Massen und unterscheiden sich von anderen Getreidemehlen nur durch ihren etwas geringeren Proteinanteil, der zu etwas unflexibleren, weniger elastischen Kombinationen mit dem Latex führt. Der etwas höhere Fettanteil im Maismehl (ca. 3,8 % anstelle von 2,2 %) unterstützt die emulgierende Wirkung zusätzlich, schränkt die Wasserbeständigkeit jedoch geringfügig ein, wie dies durch Beispiel 7 belegt wird, wo neben Hautleim als tierisches Protein Maismehl als pflanzliche Komponente eingesetzt wurde.

Soja und andere Ölfrüchte: Diese enthalten zwar hohe Proteinanteile, in ihrer natürlichen Form jedoch auch hohe Anteile an pflanzlichen Fetten, die zur Nutzung für latexbasierende rutschhemmende Beschichtungs- und Bindemittelmassen kaum geeignet sind. Sojamehl oder andere Pressrückstände aus der Ölgewinnung sind hingegen aufgrund der geringen Restfettanteile für die Verwendung als Rezepturkomponente geeignet. In praktischen Versuchen wurde aus Gründen der einfachen Verfügbarkeit ungezuckerte Sojamilch mit 4 % Protein-, 0,1 % Fett- und 4 % Stärkeanteil untersucht, die sich als geeignete Quelle pflanzlicher Polymere erwiesen hat. Um den Wassergehalt der Zusammensetzung niedrig zu halten, sollte bei Verwendung von Sojamilch besser gegebenenfalls entfettetes Milchpulver als Quelle des tierischen Proteins (anstelle von Milch oder Quark) eingesetzt werden.

In allen drei Anwendungsfällen der erfindungsgemäßen Zusammensetzung, d.h. als Beschichtungsmasse, als Formmasse und als Bindemittel, kann die Zusammensetzung vor dem Härten auch selbst geschäumt werden, um eine geschäumte Beschichtung oder einen geschäumten Gegenstand herzustellen. Das Schäumen kann dabei sowohl durch Verwendung eines Carbonats oder Hydrogencarbonats als Basenkomponente als auch durch Zusatz eines ein Treibmittel, vorzugsweise CO₂, enthaltenden Additivs, oder eine Kombination davon, oder auch unter Anwendung eines zwangsbelüfteten technischen Systems bewirkt werden.

In einem letzten Aspekt betrifft die Erfindung eine rutschhemmende Oberfläche auf einem Träger bzw. einen Gegenstand mit rutschhemmender Oberfläche, die bzw. der aus einer Zusammensetzung gemäß dem ersten Aspekt in gehärtetem Zustand besteht, die, wie oben beschrieben, auf einen Träger aufgebracht oder beispielsweise in eine Form gegossen und getrocknet, gehärtet und vemetzt wurde. Eine solche rutschhemmende Oberfläche auf einem Träger bzw. ein solcher Gegenstand mit rutschhemmender Oberfläche kann vorzugsweise zur Ladungssicherung, d.h. zur Verhinderung des Verrutschens von Ladegut, eingesetzt werden.

Einen Spezialfall stellt eine rutschhemmende Oberfläche dar, die in Form eines Aufdrucks auf dem Träger vorliegt. Darunter sind Fälle zu verstehen, in denen die erfindungsgemäße Zusammensetzung auch als Druckfarbe mit rutschhemmender Funktion dienen kann, mit der unter Anwendung eines herkömmlichen Druckverfahrens ein Aufdruck, wie z.B. eine Beschriftung, auf einem Träger, wie z.B. Papier oder Karton, aufgebracht wird. Die Aushärtung erfolgt im serienüblichen Druckprozess, wo Druckfarben thermisch getrocknet werden und somit kein zusätzlicher Arbeitsschritt oder Aufwand zum Erhitzen der erfindungsgemäßen Zusammensetzung benötigt wird. Auf diese Weise wirkt die aus der Zusammensetzung der Erfindung erzeugte Beschichtung nicht nur rutschhemmend, sondern dient auch als Informationsträger. Umgekehrt betrachtet kann eine rutschfest bedruckte Verpackung zugleich als Verpackungs- und Ladungsschutzsicherung ausgerüstet sein.

Die vorliegende Erfindung wird nun nachstehend unter Bezugnahme auf konkrete Beispiele näher beschrieben, die ausschließlich zur Illustration dienen und nicht als Einschränkung zu verstehen sind.

### BEISPIELE

In den folgenden Beispielen wurden verschiedene Rezepturen für unterschiedliche Anwendungsszenarien sowie mehrere Gegenstände aus solchen Rezepturen hergestellt, wobei jeweils darauf geachtet wurde, die qualitativen und wirtschaftlichen Vorteile des Beschichtungs- und Bindemittelsystems in den nachfolgenden Prozessschritten und im Endprodukt fortzusetzen bzw. zu übertragen und weiter auszubauen. Hierzu wurden beispielsweise konzentrierte Ansätze und Mischungen eingesetzt, um mit geringstmöglichem Wassereintrag zu arbeiten und so den Trocknungsprozess in einem wässrigen System zu optimieren. Weiters wurden praxisnahe und branchenrelevante Prüfungen im Expertenkreis durchgeführt, um den Reibwiderstand von so erzeugten rutschhemmenden Beschichtungen auf verschiedenen Trägem zu testen und zu vergleichen. In Zusammenarbeit mit Transport-Technik Günther GmbH & Co. KG in Augsburg, der DEKRA Automobil GmbH in Augsburg und dem Fraunhofer-Institut für Materialfluss und Logistik (IML) in Dortmund wurden mit unterschiedlichen Ladegütem und Reibpartnem die nachstehenden Eigenschaftsmerkmale ermittelt und bestätigt.

### Beispiele 1 bis 7 - Herstellung von Zusammensetzungen und Gegenständen daraus

### Beispiel 1 (Vergleichsbeispiel)

Stark adhäsive und hochelastische Zusammensetzung mit mäßiger Wasserbeständigkeit

### Rezeptur 1

| Komponente | Bestandteil | Gewichtsanteil |
|---|---|---|
| a) | Milch, ca. 1% Fettanteil | 50,0 Gew.-% |
| b) | Getreidemehl W450 | 9,5 Gew.-% |
| c) | NaOH-Pulver | 0,5 Gew.-% |
| d) | Naturlatex (TS ca. 50%) | 40,0 Gew.-% |
| | | 100,0 Gew.-% |

Die Komponenten a) bis c) wurden vorvermischt, danach unter ständigem Rühren auf Siedetemperatur (95-100 °C) erhitzt und, sobald die Masse sich von milchig-weiß zu transparent-trüb verfärbt hatte, ohne zusätzliche Kühlung auf ca. 30-35 °C abkühlen gelassen, bevor die Latexkomponente d) eingemischt und zumindest 10 Minuten lang gerührt und dispergiert wurde. Dabei ist - wie auch bei allen späteren Beispielen - darauf zu achten, keine zu großen Luftmengen einzurühren und kein Rührwerk zu benutzen, das die Zusammensetzung durch hohe Scherkräfte beim Rühren erwärmt.

Diese Rezeptierung verdeutlicht die Wirkungsweise und das Zusammenspiel der Einzelkomponenten recht deutlich dadurch, dass die Benetzbarkeit, die Adhäsionskräfte, die Bindekräfte und auch die Haftung auf dem jeweiligen Trägermaterial gegenüber reinem Latex signifikant verbessert und verstärkt wurden, jedoch die Elastizität etwas verringert und die Beschichtung gegenüber Wasser noch nicht stabilisiert, d.h. nicht ausreichend vernetzt, ist. Diese Rezeptur eignet sich daher für trockene Anwendungszwecke und für solche, wo schon mit geringstem Auflagedruck hochwirksame Rutschhemmung erreicht wird und auch erreicht werden muss.

### Beispiel 2

Elastische Zusammensetzung mit guter Wasserbeständigkeit (und Basisrezeptierung für rutschhemmende Produkte zur Ladungssicherung)

### Rezeptur 2

| Komponente | Bestandteil | Gewichtsanteil |
|---|---|---|
| a) | Milch, ca. 1% Fettanteil | 43,0 Gew.-% |
| b) | Getreidemehl W450 | 6,8 Gew.-% |
| c₁) | NaOH-Pulver | 0,2 Gew.-% |
| c₂) | Sumpfkalk (mind. 3 Monate alt) | 10,0 Gew.-% |
| d) | Naturlatex (TS ca. 50%) | 40,0 Gew.-% |
| | | 100,0 Gew.-% |

Die Komponenten a), b) und c₁) wurden vorvermischt, danach unter ständigem Rühren auf Siedetemperatur (95-100 °C) erhitzt und, sobald die Masse sich von milchig-weiß zu transparent-trüb verfärbt hatte, ohne zusätzliche Kühlung auf ca. 30-35 °C abkühlen gelassen, bevor die Latexkomponente d) eingemischt und zumindest 10 Minuten lang gerührt und dispergiert wurde. Im letzten Mischschritt erfolgte die langsame Beimischung der Reaktionskomponente c₂), die vordispergiert wurde und daher keine Klumpen oder Agglomerate enthielt. Anschließend erfolgte eine 10-minütige sorgfältige Dispergierung mit einem geeigneten Rühr- und Mischaggregat.

Alternativ zum Vordispergieren kann Komponente c₂) auch in 10%iger Verdünnung mit Wasser aufgeschlämmt werden, und anstatt der abschließenden Dispergierung kann die Zusammensetzung kurz nach dem Einmischen der Reaktionskomponente c₂) einer Feindispergierung auf einem Walzenstuhl oder einer Perlmühle unterzogen werden. Dieses Dispergiersystem eignet sich am besten dann, wenn Farbstoffe, Pigmente oder andere Hilfsstoffe beigemischt wurden, um diese ausreichend fein zu dispergieren.

Gegenüber Beispiel 1 ist in der Rezeptierung zu erkennen, dass durch die Erhöhung der Basenanteile und die zusätzliche basische Reaktionskomponente die Vernetzung und Stabilisierung auch gegenüber Wassereinwirkung das Optimierungsziel dieser Beschichtungsqualität ist, was die eingangs genannten Zusammenhänge und Wirkungsweisen verdeutlicht.

Durch die zusätzliche Basenkomponente, (CaOH₂) in Form von Sumpfkalk, und den entsprechend verringerten Proteinanteil sind die Mischungsverhältnisse zugunsten besserer Vernetzung und Stabilisierung verschoben. Die ursprünglich hohe Elastizität wurde in dieser Rezeptierung bewusst und gezielt zurückgenommen, und die innere Festigkeit und der viskoelastische Effekt im Gesamtsystem sind verstärkt. Diese Rezeptur wurde speziell für Ladungssicherungsprodukte entwickelt, ist für unterschiedliche Trägerwerkstoffe und Reibpartner ausgerichtet und auch für hohe mechanische Belastungen stabilisiert. Sie wurde daher unter praxisnahen Bedingungen auf ihre rutschhemmende Wirkung auf damit beschichteten Trägerwerkstoffen getestet (vgl. die Beispiele 8 bis 18). Rezeptur 2 eignet sich aufgrund ihrer besonderen Eigenschaften aber auch zur Herstellung von Gegenständen mit rutschhemmender Oberflächenwirkung, vor allem als effektives und nachhaltiges Bindemittelsystem für Produkte mit unterschiedlich hohen Füllstoffmengen.

### Beispiel 3

Zusammensetzung mit reduzierter Elastizität, hoher innerer Festigkeit und sehr guter Wasserbeständigkeit

### Rezeptur 3

| Komponente | Bestandteil | Gewichtsanteil |
|---|---|---|
| a) | Quark, ca. 1% Fettanteil | 30,0 Gew.-% |
| b) | Getreidemehl W450 | 10,0 Gew.-% |
| c₁) | NaOH-Lösung, 10%ig | 10,0 Gew.-% |
| c₂) | Sumpfkalk (mind. 3 Monate alt) | 10,0 Gew.-% |
| d) | Naturlatex (TS ca. 50%) | 40,0 Gew.-% |
| | | 100,0 Gew.-% |

Die Komponenten a), b) und c₁) wurden vorvermischt, wobei zunächst a) und c₁) vermischt wurden, um eine leicht viskose, aufgeschlossene Proteinmasse zu bilden, und erst dann Komponente b) zugesetzt und eingemischt wurde. Anschließend wurde die Mischung unter ständigem Rühren auf 90-95 °C erhitzt und wieder auf 30-35°C abkühlen gelassen, bevor die Latexkomponente d) und erst danach der Sumpfkalk c₂) unter ständigem Rühren eingemischt wurden, wonach das Gemisch weitere 15 Minuten lang gerührt wurde.

In dieser Rezeptierung ist zu erkennen, dass durch die Verwendung von Quark anstelle von Milch die Konzentration an tierischem Protein erhöht wurde, wobei die Base Ca(OH)₂ und ihre vernetzende, gegenüber Wasser stabilisierende Wirkung optimiert sind. Die Menge an Naturlatex als Elastomer wurde verringert, weil es in diesem Fall das Ziel war, eine sehr stabile, feste und zugleich noch zäh-flexible Beschichtungs- und Bindemittelrezeptierung zu erstellen. Diese Rezeptur ist für besonders anspruchsvolle und starke mechanische Belastbarkeit ausgerichtet. Harte, stabile Trägerstoffe wie Holz oder Leichtmetall erreichen in Kombination mit hohen Anpressdrücken und Gewichten der Reibpartner die beste Wirkung mit derartig stabilen und festen oberflächenaktiven Ausrüstungen.

Ein weiterer und bedeutender Aspekt dieser Rezeptur ist die Möglichkeit, einen hochelastischen Trägerwerkstoff, wie z.B. Weichschaumstoffe oder elastische Gummiprodukte, mit diesem wenig elastischen Beschichtungs- und Bindemittelsystem auszurüsten, um unerwünschte und wirkungslose "Überdehnungen" des Ausgangsprodukts zu vermeiden und für die Anwendungen in der Ladungssicherung zu optimieren.

Parallel eignet sich diese Rezeptierung hervorragend dazu, dauerhaft stabile Schäume auszubilden und auch als sehr stabiles und dauerelastisches Bindemittelsystem, wo neben der Zugabe von frei wählbaren Füllstoffen auch über die Fügetechnik (Verklebung) hochwertigste Bauteile mit rutschhemmenden Außenflächen geschaffen werden.

### Beispiel 4

Stark adhäsive und gut wasserbeständige Zusammensetzung

### Rezeptur 4

| Komponente | Bestandteil | Gewichtsanteil |
|---|---|---|
| a) | Hautleim, 4%ig in Wasser | 37,0 Gew.-% |
| b) | Getreidemehl W450 | 7,5 Gew.-% |
| c₁) | NaOH-Pulver | 0,5 Gew.-% |
| c₂) | Sumpfkalk (mind. 3 Monate alt) | 10,0 Gew.-% |
| d) | Naturlatex (TS ca. 50%) | 45,0 Gew.-% |
| | | 100,0 Gew.-% |

Das Vermischen und Vorerhitzen der Komponenten a), b) und c₁) erfolgte analog zu Beispiel 2, wonach die Latexkomponente d) eingemischt und zumindest 10 Minuten lang gerührt und dispergiert wurde. Im letzten Mischschritt erfolgte die langsame Beimischung der Reaktionskomponente c₂), die zur Verhinderung von Klumpenbildung in 10%iger Verdünnung mit Wasser aufgeschlämmt wurde. Kurz nach dem Einmischen der Komponente c₂) erfolgte eine 10-minütige Feindispergierung auf einem Walzenstuhl.

Diese Rezeptur bildet die Ausgangsbasis einfacher Optimierungen und Produktanpassungen an diverse zu beschichtende Träger, indem die Klebrigkeit und Adhäsion an der Trägeroberfläche durch einfaches Variieren der Konzentration des Hautleims einstellbar ist.

Hautleim schäumt im Vergleich zu Milchprotein wenig bis gar nicht. Dies gewährleistet einerseits blasenfreie(n) Beschichtungsauftrag und Verarbeitung, macht Hautleim aber andererseits für Verwendungen, bei denen ein Schäumen des Beschichtungsoder Bindemittels beabsichtigt ist, weitgehend ungeeignet.

### Beispiel 5

Hochelastische Zusammensetzung mit mäßiger Wasserbeständigkeit

### Rezeptur 5

| Komponente | Bestandteil | Gewichtsanteil |
|---|---|---|
| a) | Hautleim, 4%ig in Wasser | 37,0 Gew.-% |
| b) | Maismehl | 5,0 Gew.-% |
| c₁) | NaOH-Lösung 10%ig | 3,0 Gew.-% |
| c₂) | Sumpfkalk (mind. 3 Monate alt) | 5,0 Gew.-% |
| d) | Naturlatex (TS ca. 50%) | 50,0 Gew.-% |
| | | 100,0 Gew.-% |

Die Herstellung der Zusammensetzung erfolgte analog zu Beispiel 4.

Diese Rezeptur ist im elastischen Verhalten optimiert, nicht so stark vemetzt wie jene der Beispiele 2 bis 4 und wurde - in Anbetracht ihrer verringerten Wasserbeständigkeit - speziell für Innenraumanwendungen ohne dauerhafte Feuchte- und Nässebelastung entwickelt.

### Beispiel 6 - rutschhemmende Korkplatte

Stark adhäsive und elastische Zusammensetzung, gefüllt mit Korkgranulat

### Rezeptur 6

| Komponente | Bestandteil | Gewichtsanteil |
|---|---|---|
| a) | Milch, ca. 1% Fettanteil | 40,0 Gew.-% |
| b) | Getreidemehl W450 | 9,5 Gew.-% |
| c₁) | NaOH-Pulver | 0,5 Gew.-% |
| c₂) | Sumpfkalk (mind. 3 Monate alt) | 10,0 Gew.-% |
| d) | Naturlatex (TS ca. 50%) | 40,0 Gew.-% |
| | | 100,0 Gew.-% |

Die erfindungsgemäße Zusammensetzung aus Rezeptur 6 wurde wie in Beispiel 2 beschrieben hergestellt und anschließend im Verhältnis 30:70 mit Korkgranulat, Korngröße 2-3 mm, vermischt. Das so erhaltene Gemisch aus Bindemittel und Füllstoff Kork wurde in einem Plattenwerkzeug im Verhältnis 3:1 verdichtet und 3 Minuten lang auf 130 °C erhitzt, um eine gehärtete Korkplatte mit 3 mm Dicke zu erhalten, die neben ausgezeichneter Rutschhemmung auch gute Flexibilität aufweist.

### Beispiel 7 - rutschhemmende Polystyrolschaumplatte

Stark adhäsive und elastische Zusammensetzung, gefüllt mit PolystyrolschaumGranulat

### Rezeptur 7

| Komponente | Bestandteil | Gewichtsanteil |
|---|---|---|
| a) | Milch, ca. 1% Fettanteil | 40,0 Gew.-% |
| b) | Getreidemehl W450 | 4,5 Gew.-% |
| c₁) | NaOH-Pulver | 0,5 Gew.-% |
| c₂) | Sumpfkalk (mind. 3 Monate alt) | 5,0 Gew.-% |
| d) | Naturlatex (TS ca. 50%) | 50,0 Gew.-% |
| | | 100,0 Gew.-% |

Die erfindungsgemäße Zusammensetzung aus Rezeptur 7 wurde wie in Beispiel 2 beschrieben hergestellt und anschließend in einem Gewichtsverhältnis 50:50 mit Polystyrolschaumgranulat, Korngröße 2-3 mm, vermischt. Das so erhaltene Gemisch aus Bindemittel und Füllstoff Polystyrolschaum wurde in einem Plattenwerkzeug im Verhältnis 4:1 verdichtet, darin 5 Minuten lang auf 30 °C erwärmt und anschließend 45 Minuten lang bei Raumtemperatur in einem unbeheizten Umluftofen fertigtrocknen gelassen und dadurch ausgehärtet, um eine gehärtete Polystyrolschaumplatte mit 3 mm Dicke zu erhalten, die neben ausgezeichneter Rutschhemmung auch gute Stabilität und Biegefestigkeit aufweist.

### Beispiele 8 bis 18 - Herstellung von Beschichtungen aus einer gehärteten erfindungsgemäßen Zusammensetzung und Rutschfestigkeitstests damit

Die Zusammensetzung aus Beispiel 2 wurde mittels verschiedener Beschichtungsverfahren auf vier verschiedene Trägermaterialien aufgebracht und gehärtet, wie in den einzelnen Beispielen angegeben.

Die so mit den erfindungsgemäßen Zusammensetzungen ausgerüsteten Trägerwerkstoffe wurden auf ihre Reibwiderstände µ getestet. Es existieren zwar unterschiedliche Labormessverfahren zur Bewertung des Reibwiderstands, deren Ergebnisse lassen jedoch häufig keine konkreten Aussagen auf das Verhalten von Ladegut während des Transports zu. Für Vergleichsprüfungen unter standardisierten Bedingungen (die es in der Praxis und Anwendung nicht gibt) bleiben diese Laborprüfmethoden und Verfahren ein wichtiger und orientierender Bezugspunkt, werden aber für die industrielle Qualifizierung und Vermarktungsfreigabe nicht akzeptiert. Daher werden zur Beurteilung der rutschhemmenden Wirkung von Flächengebilden praxisnahe Zugprüfungen mit Originalladegütem und Reibpartnem bei jeder Witterung durchgeführt. Nur über diesen Weg werden die gesetzlich anerkannten Grundlagen erarbeitet, die in einem dem Produkt und der Anwendung zugeordneten Prüfzeugnis und für die Produktion und Vermarktung von Ladungssicherungs-Hilfsmitteln erforderlichen Prüfzertifikat münden, um die Wirksamkeit eines Systems oder eines Produkts zu dokumentieren.

Hierzu wird ein Ladegut bekannter Masse auf einer zu testenden rutschhemmenden Fläche platziert, die auf eine praxisübliche Unterlage (z.B. Siebdruckboden oder Holzpalette) aufgelegt wurde. Über Spann- und Zurrgurte wird von einer Zugmaschine eine Verschiebekraft aufgebaut und mittels einer dazwischen geschalteten Kraftmessdose die gemessene Zugkraft festgehalten, die auf das Ladegut ausgeübt wird. Es werden dabei die Rückhaltekräfte ermittelt, die erforderlich sind, um das Ladegut in Bewegung zu bringen (Haltekraft oder Haftreibung). Darüber hinaus wird das Ladegut kontinuierlich weiter verschoben, um den gleitenden Widerstand eines sich bewegenden Ladeguts zu ermitteln (Gleitreibung). Dieser Vorgang wird an einer Probe mehrfach unterbrochen und neu gestartet, um auch die dauerhafte Wirkung und den mechanischen Abbau eines Produkts zu erfassen und zu dokumentieren.

Die Haltekraft (Haftreibung), um eine Masse in Bewegung zu bringen, ist immer höher als die sich bewegende Masse (Gleitreibung). Die in den Beispielen angeführten Messergebnisse entsprechen den offiziellen und anerkannten Prüfverfahren, wo die Gleitreibung (also der niedrigste Wert im Prüfverfahren) aufgezeigt und dokumentiert wird. Diese Ergebnisse werden als Reibwert oder Reibungskoeffizient µ definiert und ausgedrückt.

Der gesetzlich vorgeschriebene Mindestreibwert für rutschhemmende Unterlagen in der Ladungssicherung beträgt 0,6 µ. Gute und hochwertige Produkte zur Ladungssicherung weisen Reibwiderstandswerte von etwa 0,8 µ auf. Die am Markt bekannten Papiere und Papierprodukte erreichen aktuell Messergebnisse im Bereich von 0,5 bis 0,6 µ und werden bevorzugt als Verpackungshilfsmittel (Zwischenlagen) gegen Verrutschen ganzer Ladungseinheiten eingesetzt. Mehrschichtsysteme, wie z.B. Träger aus Pappe mit PU-Schaum als rutschhemmendem Belag kombiniert, können die gesetzliche Mindestanforderung von 0,6 µ überschreiten und werden mit 0,6 bis 0,7 µ Reibwiderstand als kostengünstiges Einwegsystem zur Ladungssicherung eingesetzt.

### Beispiele 8 bis 11 - Beschichtung auf Wellpappe

Träger: Wellpappe mit 2 mm bzw. 4 mm Dicke
Beschichtungstechnik: beidseitiger Auftrag mittels Streich- und Spachteltechnik; Trocknung und Aushärtung bei Raumtemperatur oder mit Kontaktheizung, 1 min bei 160 °C
Beschichtung: Rezeptur 2 mit 30 g/m² (Trockengewicht)
Probengröße: 2 Stk. Zuschnitte 800 mm x 150 mm als rutschhemmende Unterlage
Reibpartner unten: LKW-Ladeboden (Siebdruckboden)
Reibpartner oben: Holzpalette mit Ladegut, Gesamtgewicht 803 kg, und Papierrolle stehend mit 1404 kg Gewicht

### Messergebnisse:

| | |
|---|---|
| Vergleichsbeispiel 1 (2 mm, ohne Beschichtung) | 0,30 bis 0,40 µ |
| Vergleichsbeispiel 2 (4 mm, ohne Beschichtung) | 0,30 bis 0,40 µ |
| Beispiel 8 (2 mm Dicke; Raumtemperatur) | 0,70 bis 0,75 µ |
| Beispiel 9 (2 mm Dicke; Heizung) | 0,71 bis 0,75 µ |
| Beispiel 10 (4 mm Dicke; Raumtemperatur) | 0,70 bis 0,80 µ |
| Beispiel 11 (4 mm Dicke; Heizung) | 0,74 bis 0,80 µ |

Die Prüfergebnisse selbst werden durch die unterschiedlichen Dicken und Trocknungsverfahren kaum beeinflusst, wenngleich die dickere Unterlage tendenziell bessere Werte liefert. Es zeigte sich jedoch, dass temperierte Trocknung und Aushärtung bei Pappe als Trägerwerkstoff geringfügige Streuungen verursacht.

### Beispiel 12 - Beschichtung auf Kraftpapier

Träge: Kraftpapier, 120 g/m²
Beschichtungstechnik: beidseitiger Auftrag mittels Walzenbeschichtung; Trocknung und Aushärtung mittels IR-Strahlung, beidseitig, 20 s bei 160 °C
Beschichtung: Rezeptur 2 mit 25 g/m² (Trockengewicht)
Probengröße: 1 Stk. Zuschnitt 1200 x 800 mm als rutschhemmende Zwischenlage
Reibpartner unten: Holzpalette
Reibpartner oben: BigBag (PP-Gewebe) mit Kunststoffgranulatfüllung mit 1056 kg Gewicht

### Messergebnisse:

| | |
|---|---|
| Vergleichsbeispiel 3 (ohne Einlage) | 0,20 bis 0,25 µ |
| Vergleichsbeispiel 4 (Papiereinlage ohne Beschichtung) | 0,32 µ |
| Beispiel 12 | 0,68 µ |

### Beispiele 13 und 14 - Beschichtung auf Korkgranulatplatte

Träger: Korkgranulatplatte, Dicke 3 mm, Körnung 2-3 mm
Beschichtungstechnik: beidseitiger Auftrag mittels Streich- und Spachteltechnik; Trocknung und Aushärtung bei Raumtemperatur oder mit Kontaktheizung, 1 min bei 160 °C
Beschichtung: Rezeptur 2 mit 40 g/m² (Trockengewicht)
Probengröße: 2 Stk. Zuschnitte 800 mm x 150 mm als rutschhemmende Unterlage
Reibpartner unten: LKW-Ladeboden (Siebdruckboden)
Reibpartner oben: Papierrolle stehend mit 1404 kg Gewicht

### Messergebnisse:

| | |
|---|---|
| Vergleichsbeispiel 5 (Korkplatte ohne Beschichtung) | 0,65 µ |
| Beispiel 13 (Raumtemperatur) | 0,91 µ |
| Beispiel 14 (Heizung) | 0,92 µ |

Wie schon in den Beispielen 8 bis 11 aufgezeigt wurde, sind die Prüfergebnisse mit unterschiedlicher Trocknungstechnik vergleichbar, es ist jedoch bei saugenden Werkstoffen wie Papier und Kork vorteilhafter, temperaturunterstützte Trocknungstechniken einzusetzen, um die durchgängige und gleichmäßige Aushärtung und Trocknung im Gesamtverbund sicherzustellen.

### Beispiel 15 - Beschichtung auf Korkgranulatplatte

Träger: Korkgranulatplatte, Dicke 3 mm, Körnung 2-3 mm
Beschichtungstechnik: beidseitiger Auftrag mittels Streich- und Spachteltechnik; Trocknung und Aushärtung mit Kontaktheizung, 1 min bei 160 °C
Beschichtung: Rezeptur 2 mit 40 g/m² (Trockengewicht)
Probengröße: 1 Stk. Zuschnitt 800 mm x 150 mm als rutschhemmende Zwischenlage
Reibpartner unten: Holzpalette
Reibpartner oben: Getränkekartons gestapelt mit 531 kg Gewicht

### Messergebnisse:

| | |
|---|---|
| Vergleichsbeispiel 6 (Korkplatte ohne Beschichtung) | 0,65 µ |
| Beispiel 15 | 0,91 µ |

### Beispiele 16 und 17 - Beschichtung auf XPS-Schaum

Träger: XPS-Schaum, Dicke 2,2 mm
Beschichtungstechnik: beidseitiger Auftrag mittels Tauch- und Rakelabziehtechnik; Trocknung und Aushärtung im temperierten Umluft-Trockenkanal, 2 min bei 70 °C
Beschichtung: Rezeptur 2 mit 25 g/m² (Trockengewicht)
Probengröße: 2 Stk. Zuschnitt 800 x 150 mm als rutschhemmende Unterlage oder 1 Stk. Zuschnitt 1200 x 1000 mm als rutschhemmende Unterlage
Reibpartner unten: LKW-Ladeboden (Siebdruckboden)
Reibpartner oben: Papierrolle stehend mit 1404 kg Gewicht

### Messergebnisse:

| | |
|---|---|
| Vergleichsbeispiel 7 (ohne Beschichtung) | 0,55 bis 0,60 µ |
| Beispiel 16 (800 x 150 mm) | 0,88 µ |
| Beispiel 17 (1200 x 1000 mm) | 1,28 µ |

### Beispiel 18 - Beschichtung auf XPS-Schaum

Träger: XPS-Schaum, Dicke 2,2 mm
Beschichtungstechnik: beidseitiger Auftrag mittels Tauch- und Rakelabziehtechnik; Trocknung und Aushärtung im temperierten Umluft-Trockenkanal, 2 min bei 70 °C
Beschichtung: Rezeptur 2 mit 25 g/m² (Trockengewicht)
Probengröße: 2 Stk. Zuschnitt 800 x 150 mm als rutschhemmende Unterlage
Reibpartner unten: LKW-Ladeboden (Siebdruckboden)
Reibpartner oben: Holzpalette mit Ladegut, Gesamtgewicht 803 kg

### Messergebnisse:

| | |
|---|---|
| Vergleichsbeispiel 8 (ohne Beschichtung) | 0,55 bis 0,60 µ |
| Beispiel 18 | 0,96 µ |

Die obigen praxisnahen Prüfergebnisse für die Beispiele belegen, dass die Beschichtungen aus erfindungsgemäßen Zusammensetzungen zur Herstellung rutschhemmender Oberflächen ausgezeichnete rutschhemmende Wirkung auf unterschiedlichen Trägerwerkstoffen zeigen. Es wurde nicht nur in allen Fällen der gesetzliche Mindestwert des Reibungskoeffizienten für den Ladeguttransport übertroffen, und das mitunter sogar deutlich, sondern auch der Reibungskoeffizient kommerzieller Produkte für die Ladegutsicherung durch erfindungsgemäße Beschichtungen deutlich verbessert.

## Patentansprüche

1. Zusammensetzung zur Herstellung rutschhemmender Oberflächen, Folgendes umfassend:
a) tierisches Protein,
b) pflanzliche Polymere,
c) Base und
d) Polymerlatex;
**dadurch gekennzeichnet, dass**
i) als pflanzliche Polymere b) pflanzliche Proteine, als solche oder in Form von Pflanzenteilen, Pflanzenmehl oder Pflanzenschrot enthalten sind; und
ii) als Base c) Ca(OH)₂ als Base und als Vernetzer enthalten ist und gegebenenfalls eine oder mehrere weitere Basen, ausgewählt aus Alkalimetall- und Erdalkalimetallhydroxiden, -hydrogencarbonaten und -carbonaten enthalten sind.

2. Zusammensetzung nach Anspruch 1, **dadurch gekennzeichnet, dass** als tierisches Protein ein oder mehrere Milchproteine enthalten sind.

3. Zusammensetzung nach Anspruch 2, **dadurch gekennzeichnet, dass** die Milchproteine in Form von Milch und/oder eines oder mehrerer Milchprodukte enthalten sind.

4. Zusammensetzung nach einem der Ansprüche 1 bis 3, **dadurch gekennzeichnet, dass** als Quelle der pflanzlichen Polymere Getreidemehl enthalten ist.

5. Zusammensetzung nach Anspruch 4, **dadurch gekennzeichnet, dass** das Getreidemehl Weizenmehl ist oder umfasst.

6. Zusammensetzung nach einem der vorangegangenen Ansprüche, **dadurch gekennzeichnet, dass** als Base c) zusätzlich NaOH oder KOH oder ein Gemisch davon enthalten ist.

7. Zusammensetzung nach einem der Ansprüche 1 bis 6, **dadurch gekennzeichnet, dass** das Ca(OH)₂ als Base c) in Form von Sumpfkalk enthalten ist.

8. Zusammensetzung nach einem der vorangegangenen Ansprüche, **dadurch gekennzeichnet, dass** als Polymerlatex Naturlatex enthalten ist.

9. Verfahren zur Herstellung einer Zusammensetzung nach einem der Ansprüche 1 bis 8 durch Vermischen der Komponenten a) bis d), wobei in einem ersten Mischschritt zunächst die Komponenten a) und b) mit zumindest einem Teil von Komponente c) vermischt werden, bevor in einem zweiten Mischschritt Komponente d) zugesetzt wird, wobei gegebenenfalls der Rest von Komponente c) gleichzeitig mit Komponente d) im zweiten Mischschritt oder danach in einem dritten Mischschritt eingemischt wird.

10. Verfahren nach Anspruch 9, **dadurch gekennzeichnet, dass** im ersten Mischschritt zunächst die Komponente a) mit Komponente c) oder einem Teil davon vermischt wird, wonach die Komponente b) eingemischt wird.

11. Verfahren nach Anspruch 9 oder 10, **dadurch gekennzeichnet, dass** das Gemisch aus den Komponenten a), b) und zumindest einem Teil von c) zwischen dem ersten und dem zweiten Mischschritt auf Siedetemperatur erhitzt wird, um die Komponenten a) und b) aufzuschließen und vorzuvernetzen.

12. Verfahren nach einem der Ansprüche 9 bis 11, **dadurch gekennzeichnet, dass** Komponente c) sowohl Ca(OH)₂ als auch zumindest ein Alkalimetallhydroxid umfasst, wovon das zumindest eine Alkalimetallhydroxid im ersten Mischschritt mit den Komponenten a) und b) vermischt wird und das Ca(OH)₂ erst im zweiten oder dritten Mischschritt eingemischt wird.

13. Verwendung einer Zusammensetzung nach einem der Ansprüche 1 bis 8 als Beschichtungsmasse, Formmasse oder Bindemittel zur Herstellung von Gegenständen mit rutschhemmender Oberfläche.

14. Rutschhemmende Oberfläche auf einem Träger bzw. Gegenstand mit rutschhemmender Oberfläche, die bzw. der aus einer Zusammensetzung nach einem der Ansprüche 1 bis 8 in gehärtetem Zustand besteht.

15. Rutschhemmende Oberfläche auf einem Träger nach Anspruch 14, **dadurch gekennzeichnet, dass** die rutschhemmende Oberfläche in Form eines Aufdrucks auf dem Träger vorliegt.

16. Verwendung einer rutschhemmenden Oberfläche auf einem Träger bzw. eines Gegenstands mit rutschhemmender Oberfläche nach Anspruch 14 oder 15 in der Ladungssicherung.

## Claims

1. A composition for manufacturing non-slip surfaces, comprising:
a) animal protein,
b) plant polymers,
c) base, and
d) polymer latex;
**characterized in that**
i) it contains, as said plant polymers b), plant proteins as such or in the form of plant parts, plant flour or crushed plants; and
ii) it contains, as said base c), Ca(OH)₂ as base and as crosslinker and optionally one or more further bases, selected from alkali metal and alkaline earth metal hydroxides, hydrocarbonates and carbonates.

2. The composition according to claim 1, **characterized in that** one or more milk proteins are contained as animal protein.

3. The composition according to claim 2, **characterized in that** said milk protein is contained in the form of milk and/or one or more milk products.

4. The composition according to any one of the claims 1 to 3, **characterized in that** grain flour is contained as a source of said plant polymers.

5. The composition according to claim 4, **characterized in that** the grain flour is or comprises wheat flour.

6. The composition according to any one of the preceding claims, **characterized in that** it additionally contains, as said base c), NaOH or KOH or a mixture thereof.

7. The composition according to any one of the claims 1 to 6, **characterized in that** the Ca(OH)₂ as said base c) is contained in the form of limewater.

8. The composition according to any one of the preceding claims, **characterized in that** natural latex is contained as said polymer latex.

9. A method for producing a composition according to any one of the claims 1 to 8 by mixing said components a) to d), wherein the components a) and b) are first mixed with at least part of component c) in a first mixing step, whereafter component d) is added in a second mixing step, wherein optionally the rest of component c) is added simultaneously with component d) in the second mixing step or thereafter in a third mixing step.

10. The method according to claim 9, **characterized in that** first the component a) is mixed with component c) or part of it in said first mixing step, whereafter component b) is added.

11. The method according to claim 9 or 10, **characterized in that** the mixture of the components a), b) and at least part of c) is heated to the boiling temperature between the first and the second mixing steps in order to digest and pre-crosslink the components a) and b).

12. The method according to any one of the claims 9 to 11, **characterized in that** the component c) comprises Ca(OH)₂ as well as at least one alkali metal hydroxide, wherein said at least one alkali metal hydroxide is mixed with the components a) and b) in the first mixing step and Ca(OH)₂ is added not before the second or third mixing step.

13. Use of a composition according to any one of the claims 1 to 8 as coating compound, molding compound or binder for producing articles having non-slip surfaces.

14. A non-slip surface on a carrier, or an article having a non-slip surface, consisting of the composition according to any one of the claims 1 to 8 in a hardened state.

15. The non-slip surface on a carrier according to claim 14, **characterized in that** the non-slip surface is provided in the form of an imprint on the carrier.

16. Use of a non-slip surface on a carrier, or an article having a non-slip surface, according to claim 14 or 15 for securing cargo.

## Revendications

1. Composition pour produire des surfaces antidérapantes, comprenant le suivant :
a) des protéines animales
b) des polymères végétaux
c) de la base
d) un latex polymère ;
**caractérisée en ce que**
i) comme polymères végétaux b) sont compris des protéines végétales, en tant que telles ou en forme de fragments végétaux, de farine végétale ou de grenaille végétale; et **en ce que**
ii) comme base c) est compris du Ca(OH)₂ comme base et comme agent réticulant et éventuellement une ou plusieurs autres bases, choisies parmi des hydroxydes, hydrogénocarbonates et carbonates de métaux alcalins ou de métaux alcalinoterreux.

2. Composition selon la revendication 1, **caractérisée en ce que** comme protéine animale sont comprises une ou plusieurs protéines de lait.

3. Composition selon la revendication 2, **caractérisée en ce que** les protéines sont comprises en forme de lait et/ou un ou plusieurs produits laitiers.

4. Composition selon une des revendications 1 à 3, **caractérisée en ce que** comme source des polymères végétaux est comprise de la farine de céréale.

5. Composition selon la revendication 4, **caractérisée en ce que** la farine de céréale est ou comprend de la farine de blé.

6. Composition selon une des revendications précédentes, **caractérisée en ce que** comme base c) est ultérieurement compris du NaOH ou du KOH ou un mélange de ceux-ci.

7. Composition selon une des revendications 1 à 6, **caractérisée en ce que** le Ca(OH)₂ en tant que base c) est compris en forme de hydroxyde de calcium.

8. Composition selon une des revendications précédentes, **caractérisée en ce que** comme latex polymère est compris du latex naturel.

9. Procédé pour préparer une composition selon une des revendications 1 à 8 moyennant le mélange des composants a) à d), dans un premier pas de mélange, d'abord les composants a) et b) étant mélangés à au moins une partie du composant c), avant d'ajouter, dans un deuxième pas de mélange, le composant d), ajoutant le reste du composant c) éventuellement en même temps que le composant d) dans le deuxième pas de mélange, ou ensuite, dans un troisième pas de mélange.

10. Procédé selon la revendication 9, **caractérisé en ce que** dans le premier pas de mélange, d'abord le composant a) est mélangé au composant c) ou à une partie de celui-ci, et **en ce que** ensuite le composant b) est ajouté.

11. Procédé selon les revendications 9 ou 10, **caractérisé en ce que** le mélange des composants a), b) et au moins une partie de c) est réchauffé à la température de d'ébullition entre le premier et le deuxième pas de mélange, pour dissoudre et pré-réticuler les composants a) et b).

12. Procédé selon une des revendications 9 à 11, **caractérisé en ce que** le composant c) comprend et du Ca(OH)₂ et au moins un hydroxyde de métal alcalin, le au moins un hydroxyde de métal alcalin étant mélangé aux composants a) et b9 dans le premier pas de mélange et **en ce que** le Ca(OH)₂ est ajouté seulement dans le deuxième ou troisième pas de mélange.

13. Utilisation d'une composition selon une des revendications 1 à 8 comme masse de revêtement, matériau de moulage ou liant pour produire des objets avec une surface antidérapante.

14. Surface antidérapante sur un support ou objet avec une surface antidérapante, composé d'une composition selon une des revendications 1 à 8 dans l'état durci.

15. Surface antidérapante sur un support selon la revendication 14, **caractérisé en ce que** la surface antidérapante est présente sur le support en forme d'impression.

16. Utilisation d'une surface antidérapante sur un support ou un objet avec une surface antidérapante selon les revendications 14 ou 15 dans la sécurisation de charges.
